# EUROPEAN PATENT SPECIFICATION

(11) **EP 3 533 809 B1**
(45) Date of publication and mention of the grant of the patent: **29.09.2021**
(21) Application number: 17863814.4
(22) Date of filing: 01.08.2017
(51) Int. Cl.: C08F 2/44, C04B 41/63, C08F 290/06, C08J 5/24, C09D 4/00, C09D 5/00

(54) **RADICAL-POLYMERIZABLE RESIN COMPOSITION**
RADIKALE-POLYMERISIERBARE HARZZUSAMMENSETZUNG
COMPOSITION DE RÉSINE POLYMÉRISABLE PAR VOIE RADICALAIRE

(30) Priority: 26.10.2016 JP 2016209808
(43) Date of publication of application: 04.09.2019
(73) Proprietor: Showa Denko K.K., Tokyo 105-8518 (JP)
(72) Inventor: KUROKI, Kunihiro, Tokyo 105-8518 (JP); SAITO, Kohei, Tokyo 105-8518 (JP); SAKAGUCHI, Yoichiro, Tokyo 105-8518 (JP)
(74) Representative: Strehl Schübel-Hopf & Partner
(86) International application number: PCT/JP2017/027938
(87) International publication number: WO 2018/078997

(56) References cited:
- WO-A1-99/19407
- WO-A1-2008/003498
- WO-A1-2014/115778
- WO-A1-2016/171150
- WO-A1-2016/171151
- JP-A- H04 507 424
- JP-A- H06 199 952
- JP-A- 2001 335 612
- JP-A- 2003 327 845
- JP-A- 2004 181 934
- JP-A- 2010 235 668
- US-A1- 2016 145 392

## Description

### Technical Field

The present invention relates to a radical-polymerizable resin composition that can radially cure in a dry condition, in water and in seawater, and further on a wet substrate, that is, on a dry surface, on the surface in water and in seawater, and on a wet surface, and can follow expansion and contraction of substrates associated with temperature swings in seasons or the time of day or night, and relates to use of the radical-polymerizable resin composition.

### Background Art

A metal soap has good solubility in resin and solvent, and has various functions and is used in a wide range of application: a curing accelerator for unsaturated polyester resins, etc., a drier for coating material and printing ink, an adhesive for rubber and tires, an extreme-pressure agent for lubricant oil, a combustion improver, a polymerization catalyst, etc.

However, when a metal soap is used as a curing accelerator under the condition where water exists, the metal soap cannot sufficiently express the function thereof (NPL 1).

As a method of solving the problem, a method of using an accelerator aid has been proposed. Examples of the accelerator aid include β-diketones, aromatic tertiary amines, mercaptans (thiol compounds), and phosphorus compounds. As a technique using such an accelerator aid, for example, PTL 1 describes the use of a chain transfer agent, such as a thiol compound having a hydrocarbon group with 3 or more carbon atoms, as an accelerator aid in the production of a copolymer for use in a cement admixture that comprises the copolymer as an indispensable component.

Since inorganic structures such as concrete structures are deteriorated with the lapse of time after construction owing to neutralization of concrete, brine damage, and freezing damage, maintenance and repair may be required.

As a method for repairing such inorganic structures, the replacement of concrete is general, but the repairing operation for structures in wet environments such as in a shore region, in rivers or in lakes, the part to be replaced must be completely shut out water by covering with a steel sheet pile and then water must be removed from the part, and consequently, the structures are difficult to repair.

In the case where concrete or a so-called polymer cement is used for replacing the surface of a structure, an insufficient strength or cracking may be caused at the joint part owing to the difference in the ages of materials. In particular, substrates may repeatedly expand and contract with temperature swings in seasons or the time of day or night, and there occurs another problem that the repaired sites may again crack or peel off.

As a method for solving the problem, for example, PTL 2 proposes a two-component mortar composition suitable for building use, which comprises a resin component comprising a norbornene group-containing resin and a methacrylate-containing compound, and a curing agent component comprising a peroxide and a thiol.

In repairing or constructing bath rooms and wet areas, as well as water supply systems and sewage systems, coating materials applicable also to wet surfaces are desired. In outdoor structures to be exposed to rain in a heavy daytime traffic area, coating materials that may cure quickly to show a certain level of strength in both dry and wet conditions are desired.

For example, in the case of a coating material using an amine-based curing agent for an epoxy resin, NPL 2 describes the cause and phenomenon of discoloration of such a coating material and proposes a main point of question and a solution thereto. NPL 2 merely describes the method for reducing the discoloration and merely emphasizes that the phenomenon does not influence the long-term properties and that the phenomenon may occur in the surface layer possibly in contact with water. However, it can be easily expected that the blushing phenomenon occurs between the substrate and the coating film when such a coating material is applied on a wet substrate. It would appear from NPL 2 that there is no method for thoroughly solving the problem in a coating composition for use on a wet substrate.

Accordingly, just as taught by NPL 2, the problem of a blushing phenomenon is inevitable for the adhesion in a wet environment or in a humid environment. This phenomenon occurs when the unreacted amine or the hydrophilic solvent in the composition (coating film) absorbs water to form a hydrate, resulting in the blushing of the coating film surface. This phenomenon detracts from the appearance of cured product and reduced the adhesive properties, and in addition, adversely affect the curing mechanism itself.

As a method of solving these problems, PTL 3 discloses an epoxy resin composition applicable even to a wet surface. PTL 4 discloses a viscous primer composition for sheet lining, which exhibits good curability on a wet surface.

### Citation List

### Patent Literature

PTL 1: Japanese Patent 4518773
PTL 2: JP 2011-137141 A
PTL 3: JP 2015-59195 A
PTL 4: JP 2010-138324 A

### Non-Patent Literature

NPL 1: Eiichiro Takiyama, "Polyester Resin Handbook", 1st Ed., Japan, Nikkan Kogyo Shimbun Ltd., June 30, 1988, p. 119
NPL 2: Nippon Paint Co., Ltd., Technical Data DS. No. 006-90-03 "Blushing of Pure Epoxy Coating Film"

WO 2008/003498 A1 discloses a two-component composition comprising a first component and a second component, wherein the first component being a resin composition comprising an unsaturated polyester resin or vinyl ester resin, an iron compound, and a thiol-containing compound, and the second component comprises a peroxide compound having formula ROOH, in which R is hydrogen or an optionally substituted alkyl group.

### Summary of Invention

### Technical Problem

The accelerator aid described in PTL 1, which has been used generally in the art, is difficult to sufficiently cure in water. All the thiol compounds exemplified as a curing agent in PTL 2 are primary thiol compounds, and nothing is disclosed therein relating to the superiority of secondary and tertiary thiol compounds to primary thiol compounds.

The epoxy resin composition described in PTL 3 still requires a long time for curing, and could not be said to be excellent in rapid curing ability under wet conditions.

The primer composition described in PTL 4 fails to cure under the condition where a lot of water exists, because cobalt naphthenate serving as an accelerator may dissolve out into water and may be deactivated.

The present invention has been made in consideration of the above-mentioned situation and provides a radical-polymerizable resin composition that can be stably cured in a dry condition, in water and in seawater, and further on a wet substrate, that is, on a dry surface, on the surface in water and in seawater, and even on a wet surface, and a prepreg sheet produced by prepolymerization of the composition, and also a concrete spalling-preventing curable material, a primer, a radical-polymerizable coating composition and a repairing material for inorganic structure comprising the radical-polymerizable resin composition.

### Solution to Problem

The present invention is set forth in the appended claims.

### Advantageous Effects of Invention

According to the present invention, there are provided a radical-polymerizable resin composition that can be stably cured in a dry condition, in water and in seawater, and further on a wet substrate, that is, on a dry surface, on the surface in water and in seawater, and on a wet surface, and a prepreg sheet, a concrete spalling preventing curable material, a primer, a radical-polymerizable coating composition and a repairing material for inorganic structure using the radical-polymerizable resin composition. Further, using the radical-polymerizable resin composition of the present invention, cured products can have suitable elongability and can therefore follow thermal expansion and contraction of substrates associated with temperature swings in seasons or the time of day or night.

### Description of Embodiments

### (I) Radical-Polymerizable Resin Composition

The radical-polymerizable resin composition of the present invention comprises one or more metal-containing compounds (A) selected from a metal soap (A1) and a β-diketone skeleton-containing metal complex (A2), one or more thiol compounds (B) selected from a secondary thiol compound (B1) and a tertiary thiol compound (B2), a radical-polymerizable compound (C), and an elastomer (D), and can be stably cured on a dry surface in air, or on a surface immersed in water or seawater, or further on a wet surface.

### <Metal-Containing Compound (A)>

The radical-polymerizable resin composition of the present invention comprises one or more metal-containing compounds (A) selected from a metal soap (A1) and a β-diketone skeleton-containing metal complex (A2) as a curing accelerator. The metal soap (A1) in the present invention is a salt of a long-chain fatty acid or an organic acid other than the long-chain fatty acid and a metal element other than potassium and sodium. The β-diketone skeleton-containing metal complex (A2) in the present invention is a complex wherein a compound having one carbon atom between two carbonyl groups coordinates to a metal element.

The content of the metal-containing compound (A) in the radical-polymerizable resin composition, which is expressed based on the amount of metal, is preferably 0.0001 to 5 parts by mass relative to 100 parts by mass of the radical-polymerizable compound (C) to be mentioned below, more preferably 0.001 to 4 parts by mass, even more preferably 0.005 to 3 parts by mass. When the content of the metal-containing compound (A) as converted in terms of the metal component falls within the above range, the composition can rapidly cure even in water and in a wet atmosphere.

### [Metal Soap (A1)]

The long chain fatty acid in the metal soap (A1) is not specifically limited, but is, for example, preferably a fatty acid having 6 to 30 carbon atoms. Specific examples of the acid include a chain or cyclic saturated fatty acid such as heptanoic acid, octanoic acid such as 2-ethylhexanoic acid, nonanoic acid, decanoic acid, neodecanoic acid, undecanoic acid, dodecanoic acid, tetradecanoic acid, hexadecanoic acid, octadecanoic acid, eicocanoic acid, docosanoic acid, tetracosanoic acid, hexacosanoic acid, octacosanoic acid, triacontanoic acid, and naphthenic acid; and an unsaturated fatty acid such as oleic acid, linoleic acid, and linolenic acid.

In addition, the acid includes rosin acids, linseed oil fatty acids, soybean oil fatty acids, and tall oil fatty acids.

The organic acid other than the long chain fatty acid in the metal soap (A1) is not specifically limited, but is preferably a weak acid having a carboxy group, a hydroxy group or an enol group and capable of dissolving in an organic solvent.

Examples of the carboxy group-containing compound include a carboxylic acid such as formic acid, acetic acid, and oxalic acid; a hydroxy acid such as citric acid, gallic acid, saccharic acid, 12-hydroxystearic acid, hydroxycinnamic acid, and folic acid; an amino acid such as alanine, and arginine; an aromatic acid such as benzoic acid, phthalic acid.

Examples of the compound having a hydroxy group or an enol group include ascorbic acid, α-acid, imide acid, erythorbic acid, croconic acid, kojic acid, squaric acid, sulfinic acid, teichoic acid, dehydroacetic acid, delta acid, uric acid, hydroxamic acid, humic acid, fulvic acid, and phosphonic acid.

Among these, the long chain fatty acid is preferred; a chain or cyclic saturated fatty acid having 6 to 16 carbon atoms or an unsaturated fatty acid having 6 to 16 carbon atoms is more preferred; octanoic acid and naphthenic acid are still more preferred; and 2-ethylhexanoic acid and naphthenic acid are further more preferred.

The metal element constituting the metal soap (A1) is at least one selected from zirconium, manganese, cobalt, bismuth, and calcium.

Preferred examples of the metal soap (A1) include zirconium octylate, manganese octylate, cobalt octylate, bismuth octylate, calcium octylate, cobalt naphthenate, bismuth naphthenate, and calcium naphthenate,; and zirconium octylate, manganese octylate, cobalt octylate, bismuth octylate, calcium octylate, bismuth naphthenate, and calcium naphthenate, are more preferred.

### [β-Diketone Skeleton-Containing Metal Complex (A2)]

Examples of the β-diketone skeleton-containing metal complex (A2) (hereinafter also simply referred to as "metal complex (A2)") include complexes formed by acetylacetone, ethyl acetoacetate or benzoyl acetone with a metal. These metal complexes (A2) also express the same function as that of the metal soaps (A1).

The metal element in the metal complex (A2) may be the same as the metal element mentioned above with respect to the metal soap (A1).

Preferred examples of the metal complex (A2) includes zirconium acetylacetonate, vanadium acetylacetonate, cobalt acetylacetonate, titanium acetylacetonate, titanium dibutoxybis(acetylacetonate), iron acetylacetonate, and cobalt ethyl acetoacetate, with zirconium acetylacetonate, titanium acetylacetonate and titanium dibutoxybis(acetylacetonate) being more preferred.

### Thiol Compound (B)

The radical-polymerizable resin composition of the present invention comprises one or more thiol compounds (B) selected from a secondary thiol compound (B1) and a tertiary thiol compound (B2). In the present invention, the thiol compound (B) works as a curing accelerator and may prevent the deactivation of metal due to water by coordinating in the vicinity of the metal of the metal-containing compound (A).

The thiol compound (B) for use in the present invention is not specifically limited as long as it is a compound having one or more mercapto groups bonding to the secondary or tertiary carbon atom in the molecule (hereinafter these may be referred to as "secondary mercapto group" and "tertiary mercapto group", respectively), but from the viewpoint of accelerating rapid curing even in water and from the viewpoint of preventing deactivation by water of the metal in the metal-containing compound (A), a polyfunctional thiol having two or more secondary or tertiary mercapto groups in the molecule is preferred, and a difunctional thiol having two secondary or tertiary mercapto groups in the molecule is more preferred. The secondary thiol compound (B1) is preferred to the tertiary thiol compound (B2).

"Polyfunctional thiol" referred to herein is a thiol compound having two or more mercapto groups as the functional groups, and "difunctional thiol" is a thiol compound having two mercapto groups as the functional groups.

The compound having two or more secondary or tertiary mercapto groups in the molecule is not specifically limited, but is, for example, preferably a compound having at least one structure represented by formula (Q) and having two or more secondary or tertiary mercapto groups in the molecule, inclusive of the mercapto group in the structure represented by the following formula (Q): 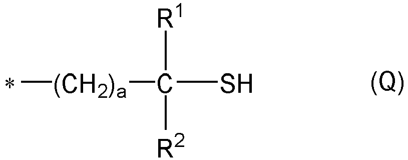 wherein R¹ represents a hydrogen atom, an alkyl group having 1 to 10 carbon atoms, or an aromatic group having 6 to 18 carbon atoms, R² represents an alkyl group having 1 to 10 carbon atoms or an aromatic group having 6 to 18 carbon atoms, * bonds to an organic group, and a represents an integer of 0 to 2.

A compound having two or more secondary mercapto groups in the molecule wherein R¹ in formula (Q) is a hydrogen atom is more preferred. Specifically, the thiol compound (B) is preferably a secondary thiol compound (B1) wherein the mercapto group in formula (Q) bonds to a secondary carbon atom.

The alkyl group having 1 to 10 carbon atoms for R¹ and R² in formula (Q) may be linear or branched. Example thereof includes a methyl group, an ethyl group, various types of propyl groups, various types of butyl groups, various types of pentyl groups, various types of hexyl groups, various types of heptyl groups, and various types of octyl groups. "Various types" mean various types of isomers including n-, sec-, tert- and iso-forms.

Among these alkyl groups, a methyl group and an ethyl group are preferred.

Examples of the aromatic group having 6 to 18 carbon atoms for R¹ and R² in formula (Q) include a phenyl group, a benzyl group, a naphthyl group, an anthryl group, and a phenanthryl group. These aromatic groups may be substituted with a halogen atom, an amino group, a nitro group, and a cyano group.

In formula (Q), a is an integer of 0 to 2, and is preferably 1.

Further, the thiol compound (B) is preferably one having at least one ester structure represented by the following formula (Q-1): 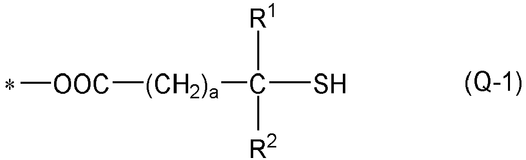 wherein R¹, R², * and a are as defined above with respect to R¹, R², * and a in formula (Q),respectively.

The subscript a in formula (Q-1) is preferably 1. In the case where a is 1 and R¹ is a hydrogen atom, that is, in the case where the secondary thiol compound (B1) has an ester structure represented by formula (Q-1), as represented by the formula (T) below, it is considered that the carbonyl oxygen and the mercapto group could easily coordinate to the metal element such as cobalt in the metal-containing compound (A), thereby allowing the metal element to be surrounded by the thiol compound. As a result, it is considered that the contact of the metal element with water can be prevented. As compared with a tertiary thiol compound (B2), wherein R¹ and R² are both substituents bulkier than hydrogen, it is considered that the secondary thiol compound (B1) can exhibit more efficiently the curing acceleration performance because the coordination of the mercapto group to a metal element is not sterically hindered. However, if the carbonyl oxygen and the mercapto group of the tertiary thiol compound (B2) stably coordinate to the metal element, it is considered that the contact between the metal element and water can be more efficiently prevented than in the case of a secondary thiol compound (B1). 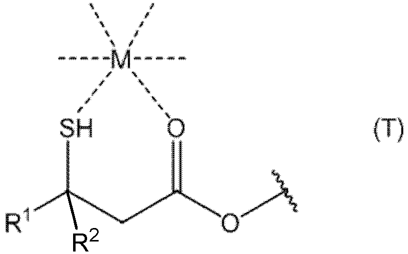 In formula (T), R¹ and R² are as defined above with respect to R¹ and R² in formula (Q-1), and M represents a metal element of the metal-containing compound (A).

The thiol compound (B) having an ester structure represented by formula (Q-1) is preferably an ester compound of a mercapto group-containing carboxylic acid represented by the following formula (S) and a polyhydric alcohol. 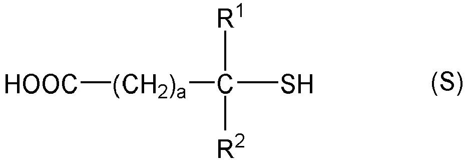 In formula (S), R¹, R² and a are as defined above with respect to R¹, R² and a in formula (Q), respectively.

Examples of the polyhydric alcohol include dihydric alcohols such as ethylene glycol, diethylene glycol, triethylene glycol, tetraethylene glycol, polyethylene glycol, propylene glycol, dipropylene glycol, tripropylene glycol, polypropylene glycol, neopentyl glycol, 1,2-propanediol, 1,3-propanediol, 1,3-butanediol, 1,4-butanediol, 1,2-pentanediol, 1,3-pentanediol, 2,3-pentanediol, 1,4-pentanediol, 1,5-pentanediol, 1,6-hexanediol, 1,9-nonanediol, tricyclodecanedimethanol, (2,2-bis(2-hydroxyethoxyphenyl)propane), bisphenol A alkylene oxide adduct, bisphenol F alkylene oxide adduct, bisphenol S alkylene oxide adduct, 1,4-cyclohexanediol, 1,4-cyclohexanedimethanol, 1,2-hexanediol, 1,3-hexanediol, 2,3-hexanediol, 1,4-hexanediol, 2,4-hexanediol, 3,4-hexanediol, 1,5-hexanediol, 2,5-hexanediol, 1,6-hexanediol, and 9,9-bis[4-(2-hydroxyethyl)phenyl]fluorenone; tri or more hydric alcohols such as glycerin, diglycerin, trimethylolethane, trimethylolpropane, ditrimethylolpropane, tris(2-hydroxyethyl) isocyanurate, hexanetriol, sorbitol, pentaerythritol, dipentaerythritol, sucrose, and 2,2-bis(2,3-dihydroxypropyloxyphenyl)propane; and the others such as polycarbonate diols and dimeric acid polyester polyols.

Among these, from the viewpoint of easy availability and from the viewpoint of improving curability in water, dihydric alcohols such as ethylene glycol, 1,2-propanediol, 1,3-propanediol, and 1,4-butanediol; tri or more polyhydric alcohols such as glycerin, trimethylolethane, trimethylolpropane, tris(2-hydroxyethyl) isocyanurate, pentaerythritol, dipentaerythritol, and 2,2-bis(2,3-dihydroxypropyloxyphenyl)propane; polycarbonate diols; and dimeric acid polyester polyols are preferred; and from the viewpoint of the number of functional groups and vapor pressure, 1,4-butanediol, trimethylolethane, trimethylolpropane, tris(2-hydroxyethyl)isocyanurate, pentaerythritol, polycarbonate diols and dimer acid polyester polyols are more preferred.

### [Secondary Thiol Compound (B1)]

In the case where the thiol compound (B) having a structure represented by formula (Q) is a secondary thiol compound (B1), specific examples thereof includes 3-mercaptobutyric acid, di(1-mercaptoethyl) 3-mercaptophthalate, di(2-mercaptopropyl) phthalate, di(3-mercaptobutyl) phthalate, ethylene glycol bis(3-mercaptobutyrate), propylene glycol bis(3-mercaptobutyrate), diethylene glycol bis(3-mercaptobutyrate), butanediol bis(3-mercaptobutyrate), octanediol bis(3-mercaptobutyrate), trimethylolethane tris(3-mercaptobutyrate), trimethylolpropane tris(3-mercaptobutyrate), pentaerythritol tetrakis(3-mercaptobutyrate), dipentaerythritol hexakis(3-mercaptobutyrate), ethylene glycol bis(2-mercaptopropionate), propylene glycol bis(2-mercaptopropionate), diethylene glycol bis(2-mercaptopropionate), butanediol bis(2-mercaptopropionate), octanediol bis(2-mercaptopropionate), trimethylolpropane tris(2-mercaptopropionate), pentaerythritol tetrakis(2-mercaptopropionate), dipentaerythritol hexakis(2-mercaptopropionate), ethylene glycol bis(4-mercaptovalerate), diethylene glycol bis(4-mercaptovalerate), butanediol bis(4-mercaptovalerate), octanediol bis(4-mercaptovalerate), trimethylolpropane tris(4-mercaptovalerate), pentaerythritol tetrakis(4-mercaptovalerate), dipentaerythritol hexakis(4-mercaptovalerate), ethylene glycol bis(3-mercaptovalerate), propylene glycol bis(3-mercaptovalerate), diethylene glycol bis(3-mercaptovalerate), butanediol bis(3-mercaptovalerate), octanediol bis(3-mercaptovalerate), trimethylolpropane tris(3-mercaptovalerate), pentaerythritol tetrakis(3-mercaptovalerate), dipentaerythritol hexakis(3-mercaptovalerate), hydrogenated bisphenol A bis(3-mercaptobutyrate), bisphenol A dihydroxyethyl ether-3-mercaptobutyrate, 4,4'-(9-fluorenylidene) bis(2-phenoxyethyl(3-mercaptobutyrate)), ethylene glycol bis(3-mercapto-3-phenylpropionate), propylene glycol bis(3-mercapto-3-phenylpropionate), diethylene glycol bis(3-mercapto-3-phenylpropionate), butanediol bis(3-mercapto-3-phenylpropionate), octanediol bis(3-mercapto-3-phenylpropionate), trimethylolpropane tris(3-mercapto-3-phenylpropionate), tris-2-(3-mercapto-3-phenylpropionate)ethyl isocyanurate, pentaerythritol tetrakis(3-mercapto-3-phenylpropionate), and dipentaerythritol hexakis(3-mercapto-3-phenylpropionate).

In the case where the secondary thiol compound (B1) is a compound having an ester structure represented by formula (Q-1), the compound is preferably derived from the above polyhydric alcohol and a carboxylic acid having the secondary mercapto group represented by formula (S). The carboxylic acid having the mercapto group represented by formula (S) includes 2-mercaptopropionic acid, 3-mercaptobutyric acid, and 3-mercapto-3-phenylpropionic acid.

The commercially available secondary thiol compounds (B1) having two or more secondary mercapto groups in the molecule may include 1,4-bis(3-mercaptobutyryloxy)butane (Karenz MT (registered trademark) BD1 manufactured by SHOWA DENKO K.K.), pentaerythritol tetrakis(3-mercaptobutyrate) (Karenz MT (registered trademark) PE1 manufactured by SHOWA DENKO K.K.), 1,3,5-tris[2-(3-mercaptobutyryloxyethyl)]-1,3,5-triazine-2,4,6(1H,3H,5H)-trione (Karenz MT (registered trademark) NR1 manufactured by SHOWA DENKO K.K.), trimethylolethane tris(3-mercaptobutyrate) (TEMB manufactured by SHOWA DENKO K.K.), and trimethylolpropane tris(3-mercaptobutyrate) (TPMB manufactured by SHOWA DENKO K.K.). Preferably, one or more of these are used.

### [Tertiary Thiol Compound (B2)]

In the case where the thiol compound (B) having the structure represented by formula (Q) is a tertiary thiol compound (B2), specific examples thereof include di(2-mercaptoisobutyl) phthalate, ethylene glycol bis(2-mercaptoisobutyrate), propylene glycol bis(2-mercaptoisobutyrate), diethylene glycol bis(2-mercaptoisobutyrate), butanediol bis(2-mercaptoisobutyrate), octanediol bis(2-mercaptoisobutyrate), trimethylolethane tris(2-mercaptoisobutyrate), trimethylolpropane tris(2-mercaptoisobutyrate), pentaerythritol tetrakis(2-mercaptoisobutyrate), dipentaerythritol hexakis(2-mercaptoisobutyrate), di(3-mercapto-3-methylbutyl) phthalate, ethylene glycol bis(3-mercapto-3-methylbutyrate), propylene glycol bis(3-mercapto-3-methylbutyrate), diethylene glycol bis(3-mercapto-3-methylbutyrate), butanediol bis(3-mercapto-3-methylbutyrate), octanediol bis(3-mercapto-3-methylbutyrate), trimethylolethane tris(3-mercapto-3-methylbutyrate), trimethylolpropane tris(3-mercapto-3-methylbutyrate), pentaerythritol tetrakis(3-mercapto-3-methylbutyrate), and dipentaerythritol hexakis(3-mercapto-3-methylbutyrate).

In the case where the tertiary thiol compound (B2) is a compound having the ester structure represented by formula (Q-1), the compound is preferably derived from the above polyhydric alcohol and a carboxylic acid having the tertiary mercapto group represented by formula (S). The carboxylic acid having the mercapto group represented by formula (S) may include 2-mercaptoisobutyric acid, and 3-mercapto-3-methylbutyric acid.

The total amount of the thiol compound (B) in the radical-polymerizable resin composition of the present invention is preferably 0.01 to 10 parts by mass relative to 100 parts by mass of the radical-polymerizable compound (C) to be mentioned below, more preferably 0.05 to 7 parts by mass, even more preferably 0.1 to 5 parts by mass. When the amount of the thiol compound (B) is 0.01 parts by mass or more, the curing function can be sufficiently exhibited, and when 10 parts by mass or less, the curing occurs rapidly.

The molar ratio of the thiol compound (B) to the metal component in the metal-containing compound (A) each in terms of the total amount [(B)/(A)] is0.1 to 150, and in an embodiment of the present invention, the ratio is more preferably 0.3 to 10, even more preferably 0.5 to 8, most preferably 0.8 to 5. When the molar ratio [(B)/(A)] is 0.1 or more, the thiol compound (B) can sufficiently coordinate around the metal of the metal-containing compound (A), and when the molar ratio is 150 or less, the balance between production cost and performance is good.

The thiol compounds (B) may be used singly or in combination of two or more thereof. In the case where a secondary thiol compound (B1) and a tertiary thiol compound (B2) are used in combination, the molar ratio of [(B1)/(B2)] is preferably 0.1 to 100, more preferably 1 to 10. When the molar ratio [(B1)/(B2)] falls within the range, the metal-containing compound (A) and the thiol compound (B) stably form the state represented by formula (T) in the radical-polymerizable resin composition, and a disulfide compound of the thiol compounds (B) is not by-produced. From the viewpoint of storing the radical-polymerizable resin composition while keeping the metal-containing compound (A) and the thiol compound (B) stable, the secondary thiol compound (B1) or the tertiary thiol compound (B2) is preferably used singly.

### <Radical-Polymerizable Compound (C)>

The radical-polymerizable resin composition of the present invention comprises a radical-polymerizable compound (C) as a basic material. In the present invention, the radical-polymerizable compound (C) is selected from a vinyl ester resin (epoxy (meth)acrylate resin), an unsaturated polyester resin, a polyester (meth)acrylate resin, a urethane (meth)acrylate resin, a (meth)acrylate resin, a radical-polymerizable unsaturated monomer having a vinyl group or a (meth)acryloyl group, and a mixture of the above resin and a radical-polymerizable unsaturated monomer. Above all, one or more selected from a vinyl ester resin, an unsaturated polyester resin, and a mixture of any of these and a radical-polymerizable unsaturated monomer are preferred. In this description, "(meth)acrylate" means "acrylate or methacrylate".

### [Vinyl Ester Resin]

The vinyl ester resin may be one produced by the reaction of an epoxy resin and an unsaturated monobasic acid.

The epoxy resin may include a bisphenol A diglycidyl ether and high-molecular weight analogues thereof, and novolak-type glycidyl ethers.

Specific examples of the resin include bisphenol-type epoxy resins (for example, those produced by reacting a bisphenol such as bisphenol A, bisphenol F, bisphenol S, or tetrabromobisphenol A with epichlorohydrin and/or methylepichlorohydrin, those produced by reacting a condensation product of a bisphenol A glycidyl ether, the above bisphenol, and epichlorohydrin and/or methylepichlorohydrin), biphenyl-type epoxy resins (for example, those produced by reacting a biphenol with epichlorohydrin and/or methylepichlorohydrin), naphthalene-type epoxy resins (for example, those produced by reacting a dihydroxynaphthalene with epichlorohydrin and/or methylepichlorohydrin), aralkyldiphenol-type epoxy resins (for example, those produced by reacting an aralkylphenol with epichlorohydrin and/or methylepichlorohydrin), diglycidyl-type epoxy resins (for example, dimer acid diglycidyl esters, diglycidyl hexahydrophthalate), alicyclic epoxy resins (for example, alicyclic diepoxy acetals, alicyclic diepoxy adipates, and alicyclic diepoxy carboxylates), oxazolidone ring-containing epoxy resins produced by reacting the above epoxy resin with a diisocyanate (as specific examples, Araldite (registered trademark) AER4152 manufactured by Asahi Kasei Epoxy Corporation), novolak-type epoxy resins (for example, those produced by reacting a phenol novolak or a cresol novolak with epichlorohydrin and/or methylepichlorohydrin), and trisphenolmethane-type epoxy resins (for example, those produced by reacting trisphenolmethane or triscresolmethane with epichlorohydrin and/or methylepichlorohydrin).

As the unsaturated monobasic acid, any known one is usable, for example, (meth)acrylic acid, crotonic acid, and cinnamic acid. In addition, a reaction product of a compound having one hydroxy group and one or more (meth)acryloyl groups and a polybasic acid anhydride is also usable. In this description, "(meth)acrylic acid" means one or both of "acrylic acid and methacrylic acid", and "(meth)acryloyl group" means one or both of "acryloyl group and methacryloyl group".

The polybasic acid is used for increasing the molecular weight of the epoxy resin, and any known one is usable. Examples thereof include succinic acid, glutaric acid, adipic acid, sebacic acid, phthalic acid, fumaric acid, maleic acid, itaconic acid, tetrahydrophthalic acid, hexahydrophthalic acid, dimer acid, ethylene glycol 2-mol maleic anhydride adduct, polyethylene glycol 2-mol maleic anhydride adduct, propylene glycol 2-mol maleic anhydride adduct, polypropylene glycol 2-mol maleic anhydride adduct, dodecanoic diacid, tridecanoic diacid, octadecanoic diacid, 1,16-(6-ethylhexadecane)dicarboxylic acid, 1,12-(6-ethyldodecane)dicarboxylic acid, and carboxy-terminated butadiene/acrylonitrile copolymer (trade name Hycar CTBN).

### [Unsaturated Polyester Resin]

The unsaturated polyester resin for use herein may include those produced by the esterification of a dibasic acid component comprising an unsaturated dibasic acid and optionally a saturated dibasic acid with a polyhydric alcohol component.

Examples of the unsaturated dibasic acid include maleic acid, maleic anhydride, fumaric acid, itaconic acid, and itaconic anhydride. These may be used singly or in combination of two or more thereof.

Examples of the unsaturated dibasic acid include aliphatic dibasic acids such as adipic acid, suberic acid, azelaic acid, sebacic acid, and isosebacic acid; aromatic dibasic acids such as phthalic acid, phthalic anhydride, halogenophthalic anhydride, isophthalic acid, terephthalic acid, tetrachlorophthalic acid, tetrachlorophthalic anhydride, dimer acid, 2,6-naphthalenedicarboxylic acid, 2,7-naphthalenedicarboxylic acid, 2,3-naphthalenedicarboxylic acid, 2,3-naphthalenedicarboxylic acid anhydride, 4,4'-biphenyldicarboxylic acid, and dialkyl esters thereof; and halogenated saturated dibasic acids. These may be used singly or in combination of two or more thereof.

The polyhydric alcohol is not specifically limited, and examples thereof include dihydric alcohols such as ethylene glycol, propylene glycol, diethylene glycol, dipropylene glycol, 1,2-butanediol, 1,3-butanediol, 1,4-butanediol, 1,5-pentanediol, 1,6-hexanediol, neopentyl glycol, 2-methyl-1,3-propanediol, 2-methyl-1,4-butanediol, 2,2-dimethyl-1,3-propanediol, 2,2,4-trimethyl-1,3-pentanediol, 2-ethyl-2-butyl-1,3-propanediol, 3-methyl-1,5-pentanediol, diethylene glycol, triethylene glycol, polyethylene glycol, dipropylene glycol, polypropylene glycol, 1,2-cyclohexaneglycol, 1,3-cyclohexaneglycol, 1,4-cyclohexaneglycol, 1,4-cyclohexanedimethanol, paraxylene glycol, bicyclohexyl-4,4'-diol, 2,6-decalin glycol, and 2,7-decalin glycol;
dihydric alcohols that are adducts of a dihydric phenol such as hydrogenated bisphenol A, cyclohexanedimethanol, bisphenol A, bisphenol F, bisphenol S, or tetrabromobisphenol A with an alkylene oxide such as propylene oxide or ethylene oxide;
tri- or more hydric alcohols such as 1,2,3,4-tetrahydroxybutane, glycerin, trimethylolpropane, and pentaerythritol.

The unsaturated polyester may be modified with a dicyclopentadiene compound as long as not detracting from the effects of the present invention. Regarding the method of modifying with a dicyclopentadiene compound, for example, a known method is employable, such as a method of preparing an addition product of dicyclopentadiene and maleic acid (didecanol monomaleate), then introducing a dicyclopentadiene skeleton using it as a monobasic acid.

In the vinyl ester resin or the unsaturated polyester resin for use in the present invention, an oxidatively polymerizable (air-curable) group such as an allyl group or a benzyl group can be introduced. The introduction method is not specifically limited. Examples of the method include a method of adding a polymer having an oxidatively polymerizable group; a method of condensing with a compound having a hydroxy group and an allyl ether group; and a method wherein a compound having a hydroxy group and an allyl ether group is reacted with an acid anhydride and the resultant reaction product is added to allyl glycidyl ether or 2,6-diglycidylphenyl allyl ether.

Oxidative polymerization (curing in air) as referred to in the present invention indicates, for example, crosslinking associated with peroxide formation and decomposition through oxidation of the methylene bond existing between an ether bond and a double bond like in an allyl ether.

### [Polyester (meth)acrylate Resin, Urethane (meth)acrylate Resin, and (meth)acrylate Resin]

As the polyester (meth)acrylate resin in the present invention, for example, a polyester produced by reacting a polycarboxylic acid and a polyhydric alcohol, specifically a resin produced by reacting a (meth)acrylic acid with the hydroxy group at both terminals of polyethylene terephthalate can be used.

As the urethane (meth)acrylate resin, for example, a resin produced by reacting a (meth)acrylic acid with the hydroxy group or the isocyanate group at both terminals of a polyurethane produced by the reaction of an isocyanate and a polyhydric alcohol can be used.

As the (meth)acrylate resin, for example, a poly(meth)acrylic resin having one or more substituents selected from a hydroxy group, an isocyanate group, a carboxy group and an epoxy group, or a resin produced by reacting a hydroxy group-containing (meth)acrylate with the substituent of a polymer produced from a monomer having the above substituent and a (meth)acrylate can be used.

### [Radical-Polymerizable Unsaturated Monomer]

In the present invention, a radical-polymerizable unsaturated monomer having a vinyl group or a (meth)acryloyl group can be used as the radical-polymerizable compound (C).

A radical-polymerizable unsaturated monomer may be used alone, but is preferably used in combination with at least one of the above vinyl ester resin and the above unsaturated polyester resin.

Specific examples of the vinyl group-containing monomer include styrene, p-chlorostyrene, vinyltoluene, α-methylstyrene, dichlorostyrene, divinylbenzene, tert-butylstyrene, vinyl acetate, diallyl phthalate, and triallyl isocyanurate.

Specific examples of the (meth)acryloyl group-containing monomer include (meth)acrylates. Examples thereof include methyl (meth)acrylate, ethyl (meth)acrylate, n-butyl (meth)acrylate, isobutyl (meth)acrylate, tert-butyl (meth)acrylate, 2-ethylhexyl (meth)acrylate, lauryl (meth)acrylate, cyclohexyl (meth)acrylate, benzyl (meth)acrylate, stearyl (meth)acrylate, tridecyl (meth)acrylate, cyclohexyl (meth)acrylate, dicyclopentanyl (meth)acrylate, dicyclopentenyl (meth)acrylate, dicyclopentenyloxyethyl (meth)acrylate, phenoxyethyl methacrylate, 2-hydroxyethyl methacrylate, ethylene glycol monomethyl ether (meth)acrylate, ethylene glycol monoethyl ether (meth)acrylate, ethylene glycol monobutyl ether (meth)acrylate, ethylene glycol monohexyl ether (meth)acrylate, ethylene glycol mono-2-ethylhexyl ether (meth)acrylate, diethylene glycol monomethyl ether (meth)acrylate, diethylene glycol monoethyl ether (meth)acrylate, diethylene glycol monobutyl ether (meth)acrylate, diethylene glycol monohexyl ether (meth)acrylate, diethylene glycol mono-2-ethylhexyl ether (meth)acrylate, neopentyl glycol di(meth)acrylate, dimethacrylate of PTMG, 1,3-butylene glycol di(meth)acrylate, 1,6-hexanediol di(meth)acrylate, neopentyl glycol di(meth)acrylate, 2-hydroxy-1,3-dimethacryloyloxypropane, 2,2-bis[4-(methacryloylethoxy)phenyl]propane, 2,2-bis[4-(methacryloxydiethoxy)phenyl]propane, 2,2-bisl4-(methacryloxypolyethoxy)phenyl|propane, tetraethylene glycol diacrylate, bisphenol AEO-modified (n = 2) diacrylate, isocyanuric acid EO-modified (n = 3) diacrylate, pentaerythritol diacrylate monostearate, dicyclopentenyl acrylate, dicyclopentenyloxyethyl acrylate, tricyclodecanyl (meth)acrylate, and tris(2-hydroxyethyl) isocyanurate acrylate.

Examples of polyfunctional (meth)acrylates include alkanediol di(meth)acrylates such as ethylene glycol di(meth)acrylate, 1,2-propylene glycol di(meth)acrylate, 1,3-butylene glycol di(meth)acrylate, 1,4-butylene glycol di(meth)acrylate, neopentyl glycol di(meth)acrylate, and 1,6-hexanediol di(meth)acrylate; polyoxyalkylene glycol di(meth)acrylates such as diethylene glycol di(meth)acrylate, dipropylene glycol di(meth)acrylate, triethylene glycol (meth)acrylate, tetraethylene glycol di(meth)acrylate, and polyethylene glycol (meth)acrylate; trimethylolpropane di(meth)acrylate, glycerin di(meth)acrylate, pentaerythritol di(meth)acrylate, trimethylolpropane tri(meth)acrylate, glycerin tri(meth)acrylate, pentaerythritol tri(meth)acrylate, pentaerythritol tetra(meth)acrylate, and dipentaerythritol hexa(meth)acrylate.

Further, as the radical-polymerizable unsaturated monomer, the following compounds are also usable. Specifically, the compounds include divinyl benzene, diallyl phthalate, triallyl phthalate, triallyl cyanurate, triallyl isocyanurate, allyl (meth)acrylate, diallyl fumarate, allyl methacrylate, vinylbenzyl butyl ether, vinylbenzyl hexyl ether, vinylbenzyl octyl ether, vinylbenzyl (2-ethylhexyl) ether, vinylbenzyl (β-methoxymethyl) ether, vinylbenzyl (n-butoxypropyl) ether, vinylbenzyl cyclohexyl ether, vinylbenzyl (β-phenoxyethyl) ether, vinylbenzyl dicyclopentenyl ether, vinylbenzyl dicyclopentenyloxyethyl ether, vinylbenzyl dicyclopentenylmethyl ether, and divinylbenzyl ether.

In addition to the above, dicyclopentenyl (meth)acrylate and dicyclopentenyloxyethyl (meth)acrylate are also usable.

These may be used singly or in combination of two or more thereof.

The radical-polymerizable unsaturated monomer can be used for lowering the viscosity of the radical-polymerizable resin composition of the present invention and for enhancing the hardness, the strength, the chemical resistance and the waterproofness thereof. However, too much content of the monomer may deteriorate the cured product and may cause environmental pollution. Consequently, the content of the radical-polymerizable unsaturated monomer is preferably 90% by mass or less in the radical-polymerizable compound (C).

Further, in the case where the radical-polymerizable compound (C) comprises especially styrene as the radical-polymerizable unsaturated monomer, the content thereof is preferably 60% by mass or less, more preferably 50% by mass or less, even more preferably 20% by mass or less, still more preferably 5% by mass or less. When the content of styrene in the radical-polymerizable compound (C) is more than 60% by mass, styrene may unfavorably dissolve out into water to embrittle the cured product.

In the radical-polymerizable compound (C), a catalyst and a polymerization inhibitor used in synthesizing a vinyl ester resin, an unsaturated polyester resin, a polyester (meth)acrylate resin, a urethane (meth)acrylate resin and a (meth)acrylate resin may remain.

Examples of the catalyst include tertiary nitrogen-containing compounds such as triethylamine, pyridine derivatives, and imidazole derivatives; amine salts such as tetramethylammonium chloride, and triethylamine; phosphorus compounds such as trimethylphosphine, and triphenylphosphine.

Examples of the polymerization inhibitor include hydroquinone, methylhydroquinone, and phenothiazine.

In the case where a catalyst or a polymerization inhibitor remains in the radical-polymerizable compound (C), the amount of each is preferably 0.001 to 2 parts by mass relative to 100 parts by mass of the total of the vinyl ester resin and the unsaturated polyester resin.

The content of the radical-polymerizable compound (C) in the radical-polymerizable resin composition of the present invention is preferably 10 to 99.9% by mass, more preferably 15 to 80% by mass, even more preferably 20 to 60% by mass, still more preferably 25 to 40% by mass. When the content of the radical-polymerizable compound (C) in the radical-polymerizable resin composition falls within the above range, the hardness of the cured product can be furthermore higher.

### <Elastomer (D)>

The radical-polymerizable resin composition of the present invention comprises an elastomer (D). Specifically, the elastomer includes a styrene-butadiene rubber, an acrylonitrile-butadiene rubber, an isoprene rubber, a butadiene rubber, a butyl rubber, a chloroprene rubber, an ethylene-propylene rubber, a urethane rubber, a silicone rubber, a chlorosulfonated polyethylene rubber, a chlorinated polyethylene rubber, an acrylic rubber, an epichlorohydrin rubber, and a fluorine rubber. Above all, from the viewpoint of solubility with the radical-polymerizable compound (C), an isoprene rubber, a butadiene rubber and a chloroprene rubber are preferred.

From the viewpoint of reactivity impartation in radical polymerization, the elastomer (D) may be one obtained through (meth)acrylic modification. In addition, from the viewpoint of further reactivity impartation in radical polymerization or from the viewpoint of curability impartation by active energy, a copolymer of at least one selected from isoprene, butadiene, chloroprene and 2,3-dichloro-1,3-butadiene, and at least one selected from a (meth)acrylic acid and a (meth)acrylate having 2 or more (meth)acryloyloxy groups may be preferably used. The (meth)acrylate having 2 or more (meth)acryloyloxy groups includes an alkylene glycol di(meth)acrylate such as ethylene glycol di(meth)acrylate, and propylene glycol di(meth)acrylate.

The content of the elastomer (D) in the radical-polymerizable resin composition of the present invention is preferably 1 to 40 parts by mass relative to 100 parts by mass of the radical-polymerizable compound (C), more preferably 2 to 20 parts by mass, even more preferably 3 to 15 parts by mass. When the content of the elastomer (D) is 1 part by mass or more, the elongation performance in curing the radical-polymerizable resin composition can be sufficiently improved, and when the content is 40 parts by mass or less, the elastomer (D) can be prevented from bleeding out after curing the radical-polymerizable resin composition, while the compatibility of the elastomer (D) with the radical-polymerizable compound (C) is secured.

### <Radical Polymerization Initiator (E)>

The radical-polymerizable resin composition of the present invention preferably comprises a radical polymerization initiator (E) as a curing agent. The radical polymerization initiator (E) includes a thermal radical polymerization initiator (E-1) and a photoradical polymerization initiator (E-2).

Examples of the thermal radical polymerization initiator (E-1) include organic peroxides, for example, diacyl peroxides such as benzoyl peroxide; peroxy esters such as tert-butyl peroxybenzoate; hydroperoxides such as cumene hydroperoxide, diisopropylbenzene hydroperoxide, tert-butyl hydroperoxide, and paramenthane hydroperoxide; dialkyl peroxides such as dicumyl peroxide; ketone peroxides such as methyl ethyl ketone peroxide, and acetyl acetone peroxide; peroxyketals, alkyl peresters, and percarbonates.

The photoradical polymerization initiator (E-2) includes benzoin ethers such as benzoin alkyl ethers; benzophenones such as benzophenone, benzil, and methyl orthobenzoyl benzoate; acetophenones such as benzyl dimethyl ketal, 2,2-diethoxyacetophenone, 2-hydroxy-2-methylpropiophenone, 4-isopropyl-2-hydroxy-2-methylpropiophenone, and 1,1-dichloroacetophenone; and thioxanthones such as 2-chlorothioxanthone, 2-methylthioxanthone, and 2-isopropylthioxanthone.

The photoradical polymerization initiator (E-2) sensitive to UV light to visible light includes various known initiators such as acetophenones, benzyl ketals, and (bis)acylphosphine oxides, and specific examples thereof include Irgacure 1700 (trade name, manufactured by Ciba Specialty Chemicals Corporation) which is a 75%/25% mixture of 2-hydroxy-2-methyl-1-phenylpropan-1-one (trade name: Darocur 1173, manufactured by Ciba Specialty Chemicals Corporation) and bis(2,6-dimethoxybenzoyl)-2,4,4-trimethylpentyl phosphine oxide (manufactured by Ciba Specialty Chemicals Corporation); Irgacure 1800 (trade name, manufactured by Ciba Specialty Chemicals Corporation) which is a 75%/25% mixture of 1-hydroxycyclohexyl phenyl ketone (trade name: Irgacure 184, manufactured by Ciba Specialty Chemicals Corporation) and bis(2,6-dimethoxybenzoyl)-2,4,4-trimethylpentyl phosphine oxide (manufactured by Ciba Specialty Chemicals Corporation); Irgacure 1850 (trade name, manufactured by Ciba Specialty Chemicals Corporation) which is a 50%/50% mixture of the preceding compounds; bis(2,4,6-trimethylbenzoyl)phenyl phosphine oxide (trade name: Irgacure 819, manufactured by Ciba Specialty Chemicals Corporation); 2,4,6-trimethylbenzoyl diphenyl phosphine oxide (trade name; Lucirin TPO, manufactured by BASF AG); and Darocur 4265 (trade name) which is a 50%/50% mixture of 2-hydroxy-2-methyl-1-phenylpropan-1-one (trade name: Darocur 1173, manufactured by Ciba Specialty Chemicals Corporation) and 2,4,6-trimethylbenzoyldiphenyl phosphine oxide (trade name: Lucirin TPO, manufactured by BASF AG).

The photoradical polymerization initiator (E-2) sensitive to a visible light region includes camphor quinone, benzyltrimethylbenzoyl diphenyl phosphinoxide, methyl thioxanthone, and dicyclopentadiethyltitanium-di(pentafluorophenyl).

These radical polymerization initiators (E) may be used singly or in combination of two or more thereof. For the purpose of assisting one of the thermal curing reaction and the photocuring reaction, the other curing reaction may be used, for example, the thermal radical polymerization initiator (E-1) and the photoradical polymerization initiator (E-2) may be combinedly used, as needed.

Depending on molding conditions, a composite form such as organic peroxide/dye, diphenyl iodide salt/dye, imidazole/keto compound, hexaallylbiimidazole compound/hydrogen donor compound, mercaptobenzothiazole/thiopyrylium salt, metal arene/cyanine dye, or hexaallylbiimidazole/radical generator is also employable.

In the case where the radical-polymerizable resin composition of the present invention comprises the radical polymerization initiator (E), the amount thereof is preferably 0.1 to 10 parts by mass relative to 100 parts by mass of the radical-polymerizable compound (C), more preferably 0.5 to 8 parts by mass, even more preferably 0.5 to 5 parts by mass.

### <Curing Accelerator (H)>

The radical-polymerizable resin composition of the present invention may comprise a curing accelerator (H) other than the metal-containing compound (A) and the thiol compound (B) for the purpose of improving the curability.

The curing accelerator (H) other than the metal-containing compound (A) and the thiol compound (B) includes amines, for example, N,N-substituted anilines, N,N-substituted p-toluidines, and 4-(N,N-substituted amino)benzaldehydes. Example thereof include aniline, N,N-dimethylaniline, N,N-diethylaniline, p-toluidine, N,N-dimethyl-p-toluidine, N,N-bis(2-hydroxyethyl)-p-toluidine, 4-(N,N-dimethylamino)benzaldehyde, 4-[N,N-bis(2-hydroxyethyl)amino]benzaldehyde, 4-(N-methyl-N-hydroxyethylamino)benzaldehyde, N,N-bis(2-hydroxypropyl)-p-toluidine, N-ethyl-m-toluidine, triethanolamine, m-toluidine, diethylenetriamine, pyridine, phenylmorpholine, piperidine, N,N-bis(hydroxyethyl)aniline, and diethanolaniline.

However, a part or all of the curing accelerator (H) dissolves in water or eluted into water or forms a complex with water in some cases. Therefore, the curing accelerator (H) possibly eluted into water is preferably not used, particularly when using in water or seawater.

In the case where the radical-polymerizable resin composition of the present invention comprises a curing accelerator (H), the amount thereof is preferably 0.01 to 10 parts by mass relative to 100 parts by mass of the radical-polymerizable compound (C), more preferably 0.05 to 5 parts by mass, even more preferably 0.1 to 3 parts by mass.

### <Filler (F)>

The radical-polymerizable resin composition of the present invention may comprise a filler (F) for the purpose of enhancing workability and for controlling physical properties. For example, the filler (F) includes an inorganic filler and an organic filler.

As the inorganic filler, any known one is usable, including cement, quicklime, river gravel, river sand, seashore gravel, seashore sand, mountain gravel, damaged stone, crushed sand, sand comprising silica as the main component such as silica sand, artificial aggregate such as ceramics or glass waste, aluminum hydroxide, talc, zeolite, activated carbon, and metal oxide. However, from the viewpoint of heat generation and shrinkage through hydration reaction of cement, a combination of cement causing hydration reaction and a dried aggregate of river gravel is preferred.

In the case where a cured product having a low strength and a high elongation is desired to be obtained, a filler mainly selected from titanium oxide, calcium carbonate, talc, ferric oxide, zinc oxide and shirasu (volcanic soil) balloon may be added. In general, calcium carbonate having a small specific surface area may be insufficient in the effect of improving the strength at break and the elongation at break of cured products. Calcium carbonate having a larger specific surface area may have a better effect of improving the strength at break and the elongation at break of cured products.

In the case where calcium carbonate is used, and when the effect thereof of improving the thixotropy of blended mixtures or the strength at break and the elongation at break of cured products is specifically expected, colloidal calcium carbonate is preferably used.

On the other hand, heavy calcium carbonate may be added for the purpose of viscosity reduction, weight increase and cost reduction of blended mixtures, and as such heavy calcium carbonate, the following may be used as needed.

Heavy calcium carbonate is one prepared by mechanically grinding and processing natural chalk, marble, or limestone. The grinding method includes a dry method and a wet method. Heavy calcium carbonate may be classified and formed into products having a different mean particle size. Though not specifically limited, in the case where the effect thereof of improving the strength at break and the elongation at break of cured products is expected, heavy calcium carbonate has a specific surface area of preferably 1.5 m²/g or more and 50 m²/g or less, more preferably 2 m²/g or more and 50 m²/g or less, even more preferably 2.4 m²/g or more and 50 m²/g or less, and especially preferably 3 m²/g or more and 50 m²/g or less.

In the case where the specific surface area is less than 1.5 m²/g, the improving effect may be insufficient. Needless-to-say, this shall not apply to the case of mere viscosity reduction or weight increase.

Various types of cements are usable, including Portland cements such as normal Portland cement, early-strength Portland cement, ultrahigh-early-strength Portland cement, moderate-heat Portland cement, and sulfate-resistant Portland cement; mixed cements such as slag cement, silica cement, and fly ash cement; special cements such as ultrarapid hardening cement, alumina cement, oil well cement, geothermal cement, color cement, and powdery cement; and various gypsums.

From the viewpoint of imparting flame retardancy, aluminum hydroxide is also usable, and from the viewpoint of controlling flowability, fumed silica, or talc is also usable. In addition, from the viewpoint of coloration, a colorant or an inorganic pigment such as titanium oxide can be used, and further, Molecular sieves are also usable.

For fixing anions such as chloride ions, hydrotalcites or hydrocalumites may also be used.

The hydrotalcites may be natural products or synthetic products, and may be used irrespective of the presence or absence of surface treatment or presence or absence of crystal water. For example, basic carbonates represented by the following general formula (G) may be used.

Mₓ·Mg_{y}·Al_{Z}CO₃(OH)_{xr+2y+3z-2}·mH₂O (G)

wherein M represents an alkali metal or zinc, x represents a number of 0 to 6, y represents a number of 0 to 6, z represents a number of 0.1 to 4, r represents a valence of M, m represents a number of crystal water of 0 to 100.

The hydrocalumites may be natural products or synthetic products, and may be used irrespective of the presence or absence of surface treatment or presence or absence of crystal water. For example, those represented by the following general formulae (H) and (J) may be used.

3CaO·Al₂O₃·CaX₂·kH₂O (H)

wherein X represents a monovalent anion, and k ≤ 20.

3CaO·Al₂O₃·CaY·kH₂O (J)

wherein Y represents a divalent anion, and k ≤ 20.

The calumites carry nitrite ions (NO₂⁻) that are said to be effective for preventing corrosion of reinforcing steel in the stage or production, and examples of the anions that may be carried by the calumites include nitrate ions (NO₃⁻), hydroxide ions (OH-), oxalate ions (CH₃COO⁻), carbonate ions (CO₃⁻), and sulfate ions (SO₄²⁻).

Such hydrotalcites and hydrocalumites may be used in the form of simple substances thereof or may be used by mixing in cement paste.

In the case where they are mixed in cement paste, it is anticipated that hydroxide ions (OH-) existing in hydration reaction or sulfate ions (SO₄²⁻) contained in cement may have some influences on the anion exchange reaction that is characteristic of calumites. From the viewpoint of maintaining the exchange reaction with the intended chloride ions, hydrocalumites that carry nitrite ions are preferred.

As the organic filler, various organic fillers such as amide wax, and absorbent polymer are usable.

For the purpose of attaining weight reduction and cost reduction without causing any significant degradation of physical properties, microballoons may be added along with such a reinforcing filler. Though not specifically limited thereto, examples of such microballoons (hereinafter simply referred to as "balloons") include hollow bodies (inorganic balloons and organic balloons) composed of an inorganic or organic material having a diameter of 1 mm or less, preferably 500 µm or less, more preferably 200 µm or less. In particular, microballoons having a true specific gravity of 1.0 g/cm³ or less are preferred, and those having a true specific gravity of 0.5 g/cm³ or less are more preferred.

Examples of the inorganic balloons include silicate balloons and non-silicate balloons. The silicate balloons include shirasu balloons, perlite, glass balloons, silica balloons and fly ash balloons; and non-silicate balloons include alumina balloons, zirconia balloons and carbon balloons.

Examples of the organic balloons include thermosetting resin balloons and thermoplastic resin balloons. Examples of the thermosetting resin balloons include phenol balloons, epoxy balloons, and urea balloons; and examples of the thermoplastic balloons include saran balloons, polystyrene balloons, polymethacrylate balloons, polyvinyl alcohol balloons, and styrene-acrylic balloons. Crosslinked thermoplastic resin balloons are also usable. Balloons as referred to herein may be foamed balloons or balloons produced by preparing those that comprise a foaming agent followed by foaming them.

The balloons may be used singly or two or more kinds thereof may be mixed and used. Further, the surfaces of the balloons may treated with a fatty acid, a fatty acid ester, a rosin, a lignin rosinate, a silane coupling agent, a titanium coupling agent, an aluminum coupling agent, or a polypropylene glycol, for the purpose of improving the dispersibility and the processability of the blended mixtures, and the thus-treated balloons may be used here. The balloons are used for reducing the weight and the cost of cured products without detracting from the flexibility, elongation and strength of the physical properties thereof.

In the case where the photoradical polymerization initiator (E-2) is used, a filler not reducing light transmission is preferably used, and examples thereof include fumed silica, glass powder, glass milled fibers, and silica powder.

The amount of the filler (F) in the radical-polymerizable resin composition of the present invention is preferably 0.1 to 700 parts by mass relative to 100 parts by mass of the radical-polymerizable compound (C), more preferably 0.1 to 500 parts by mass, and even more preferably 1 to 500 parts by mass. When the amount of the filler falls within the above range, water remaining inside can be fully removed, and there may not occur any trouble in operation such as injection.

### <Fiber (G)>

The radical-polymerizable composition of the present invention may comprise fibers as needed. Specific examples of the fibers usable in the present invention include glass fibers, carbon fibers, vinylon fibers, nylon fibers, aramid fibers, polypropylene fibers, acrylic fibers, polyester fibers such as polyethylene terephthalate fibers, cellulose fibers, metal fibers such as steel fibers, ceramic fibers such as alumina fibers. Preferably, these fibers are used in the form of fiber structures, biaxial meshes or triaxial meshes selected from, for example, plain-woven fabrics, sateen woven fabrics, nonwoven fabrics, mats, rovings, chopped fabrics, knitted fabrics, braids, and composite structures thereof. For example, in some cases, the radical-polymerizable composition may be impregnated into the fiber structure and then prepolymerized to form a prepreg.

As the meshes, for example, biaxial meshes and triaxial meshes are usable. The length of one side of the square of the biaxial mesh (mesh size) and the length of one side of the triangle of the triaxial mesh (mesh size) are each preferably 5 mm or more, more preferably 10 to 20 mm. By using a biaxial mesh or a triaxial mesh, a curable material for prevention of concrete spalling that is lightweight and economical and excellent in workability and durability can be obtained.

Preferably, these fibers are used for enhancing the performance of coating such as the resistance to concrete spalling, FRP waterproofness, or used for producing FRP molded articles.

For use for preventing concrete spalling, glass fibers, and cellulose fibers are preferred from the viewpoint that the degree of deterioration of the under coat can be visually inspected from the outside.

The content of fibers is preferably 0.1 to 90% by mass in the radical-polymerizable resin composition, more preferably 1 to 75% by mass, even more preferably 2 to 50% by mass.

### <Other Components>

### [Polymerization Inhibitor]

The radical-polymerizable resin composition of the present invention may comprise a polymerization inhibitor from the viewpoint of suppressing excessive polymerization of the radical-polymerizable compound (C) and for controlling the reaction speed.

The polymerization inhibitor may be any known one, including hydroquinone, methylhydroquinone, phenothiazine, catechol, and 4-tert-butylcatechol.

### [Curing Retardant]

The radical-polymerizable resin composition of the present invention may comprise a curing retardant for the purpose of retarding the curing of the radical-polymerizable composition (C). The curing retardant includes a free radical-type curing retardant, and examples thereof include TEMPO derivatives such as 2,2,6,6-tetramethylpiperidin-1-oxyl free radical (TEMPO), 4-hydroxy-2,2,6,6-tetramethylpiperidin-1-oxyl free radical (4H-TEMPO), and 4-oxo-2,2,6,6-tetramethylpiperidin-1-oxyl free radical (4-Oxo-TEMPO). Among these, 4-hydroxy-2,2,6,6-tetramethylpiperidin-1-oxyl free radical (4H-TEMPO) is preferred from the viewpoint of cost and easy handling ability.

In the case where the radical-polymerizable resin composition comprises a polymerization inhibitor and a curing retardant, the amount of each is preferably 0.0001 to 10 parts by mass relative to 100 parts by mass of the radical-polymerizable compound (C), more preferably 0.001 to 10 parts by mass.

### [Coupling Agent]

The radical-polymerizable resin composition of the present invention may comprise a coupling agent for the purpose of enhancing workability and for the purpose of enhancing adhesion to substrates. The coupling agent includes known silane coupling agents, titanate coupling agents, and aluminum coupling agents.

Examples of such coupling agents include silane coupling agents represented by R³-Si(OR⁴)₃, wherein R³ is, for example, an aminopropyl group, a glycidyloxy group, a methacryloxy group, an N-phenylaminopropyl group, a mercapto group, or a vinyl group, and R⁴ is, for example, a methyl group, or an ethyl group.

In the case where the radical-polymerizable resin composition comprises a coupling agent, the amount thereof is preferably 0.001 to 10 parts by mass relative to 100 parts by mass of the radical-polymerizable compound (C).

### [Plasticizer]

The radical-polymerizable resin composition of the present invention may be blended with a plasticizer as needed. The plasticizer is not specifically limited and may be appropriately selected form the purpose of controlling the physical properties and the characteristics of the composition. Examples of the plasticizer include phthalates such as dibutyl phthalate, diheptyl phthalate, di(2-ethylhexyl) phthalate, and butylbenzyl phthalate; nonaromatic dibasic acid esters such as dioctyl adipate, dioctyl sebacate, dibutyl sebacate and isodecyl succinate; aliphatic esters such as butyl oleate, and methyl acetylricinolate; polyalkylene glycol esters such as diethylene glycol dibenzoate, triethylene glycol dibenzoate, pentaerythritol ester; phosphates such as tricresyl phosphate and tributyl phosphate; trimellitates; polystyrenes such as polystyrene, poly-α-methylstyrene; polybutadiene, polybutene, polyisobutene, butadiene-acrylonitrile, and polychloroprene; chlorinated paraffins; hydrocarbon oils such as alkyl diphenyl, and partially hydrogenated terphenyl; process oils; polyethers, for example, polyether polyols such as polyethylene glycol, polypropylene glycol or polytetramethylene glycol, and derivatives from such polyether glycols where the hydroxy group in the polyol moiety has been converted into an ester group or an ether group; epoxy plasticizers such as epoxidated soybean oil, and benzyl epoxystearate; polyester plasticizers obtained from a dibasic acid such as sebacic acid, adipic acid, azelaic acid or phthalic acid, and a dialcohol such as ethylene glycol, diethylene glycol, triethylene glycol, propylene glycol or dipropylene glycol; and vinyl polymers obtained through polymerization of a vinyl monomer in various methods such as typically acrylic plasticizers.

Above all, by adding a high-molecular plasticizer of a polymer having a number-average molecular weight of 500 to 15,000, the mechanical characteristics such as viscosity of the radical-polymerizable composition and also tensile strength and elongation of the cured products obtained by curing the composition can be controlled, and as compared with the case of using a low-molecular plasticizer that does not comprise a polymer component in the molecule, the initial-stage physical properties of the composition can be kept as such for a long period of time, and therefore use of such high-molecular plasticizers is preferred. Though not limited, the high-molecular plasticizer may have or may not have a functional group.

The number-average molecular weight of the high-molecular plasticizer is more preferably 800 to 10,000, even more preferably 1,000 to 8,000. When the number-average molecular weight is 500 or more, continuous flowing out of the plasticizer owing to influence of heat, rainfall and water thereon may be prevented, and the initial-stage physical properties may be kept as such for a long period of time. On the other hand, when the number-average molecular weight is 15,000 or less, viscosity increase may be prevented and sufficient processability can be secured.

### [Solvent]

The radical-polymerizable resin composition of the present invention may be blended with a solvent as needed. Examples of the solvent that may be blended include an aromatic hydrocarbon solvents such as toluene and xylene; ester solvents such as ethyl acetate, butyl acetate, amyl acetate, and cellosolve acetate; and ketone solvents such as methyl ethyl ketone, methyl isobutyl ketone, and diisobutyl ketone. The solvent may be used in producing polymers.

### [Polyisocyanate Compound]

The radical-polymerizable resin composition of the present invention may comprise a polyisocyanate compound. The polyisocyanate compound reacts with the hydroxy group of the radical-polymerizable compound (C) to form a cured coating film.

The polyisocyanate compound comprises two or more isocyanate groups in the molecule, and the isocyanate group may be blocked with a blocking agent, etc.

Examples of the polyisocyanate compound not blocked with a blocking agent include aliphatic diisocyanates such as lysine diisocyanate, hexamethylene diisocyanate, and trimethylhexane diisocyanate; cycloaliphatic diisocyanates such as hydrogenated xylylene diisocyanate, isophorone diisocyanate, methylcyclohexane-2,4 (or 2,6)-diisocyanate, 4,4'-methylenebis(cyclohexyl isocyanate), and 1,3-(isocyanatomethyl)cyclohexane; aromatic diisocyanates such as tolylene diisocyanate, xylylene diisocyanate, and diphenylmethane diisocyanate; tri- or more polyisocyanates such as lysine triisocyanate; as well as addition products of each of these polyisocyanates with a polyhydric alcohol, a low molecular weight polyester resin, or water; cyclized polymers of the above diisocyanates (for example, isocyanurates), and biuret-type addition products thereof. Above all, isocyanurates of hexamethylene diisocyanate are preferred.

These polyisocyanate compounds may be used singly or in combination of two or more thereof.

In the case where the radical-polymerizable resin composition comprises a polyisocyanate compound, the amount thereof is preferably 0.1 to 50 parts by mass relative to 100 parts by mass of the radical-polymerizable compound (C), more preferably 1 to 30 parts by mass, even more preferably 2 to 20 parts by mass.

The blocked polyisocyanate compound is one prepared by blocking the isocyanate group in the above polyisocyanate compound with a blocking agent.

Examples of the blocking agent include phenol compounds such as phenol, cresol, and xylenol; lactams such as ε-caprolactam, δ-valerolactam, γ-butyrolactam, and β-propiolactam; alcohols such as methanol, ethanol, n- or iso-propyl alcohol, n-, iso- or tert-butyl alcohol, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and benzyl alcohol; oximes such as formamidoxime, acetaldoxime, acetoxime, methylethyl ketoxime, diacetyl monoxime, benzophenone oxime, and cyclohexane oxime; active methylenes such as dimethyl malonate, diethyl malonate, ethyl acetoacetate, methyl acetoacetate, and acetyl acetone. By mixing the polyisocyanate with the blocking agent, the isocyanate group in the polyisocyanate can be readily blocked.

In the case where the polyisocyanate compound is an unblocked polyisocyanate compound, the radical-polymerizable compound (C) in the radical-polymerizable resin composition of the present invention reacts with the polyisocyanate compound, and therefore, it is preferable that the radical-polymerizable compound (C) and the polyisocyanate are separated before use and mixed in use.

A curing catalyst may be used for reacting the radical-polymerizable compound (C) and the polyisocyanate compound. Preferred examples of the curing catalyst include organic metal catalysts such as tin octylate, dibutyl tin di(2-ethylhexanoate), dioctyl tin di(2-ethylhexanoate), dioctyl tin diacetate, dibutyl tin dilaurate, dibutyl tin oxide, dioctyl tin oxide, and lead 2-ethylhexanoate.

In the case where the radical-polymerizable resin composition comprises the above curing catalyst, the amount thereof is preferably 0.01 to 5 parts by mass relative to 100 parts by mass of the radical-polymerizable compound (C), more preferably 0.05 to 4 parts by mass.

### [Surfactant]

The radical-polymerizable resin composition of the present invention preferably comprises a surfactant from the viewpoint of well mixing the resin and water so that the composition could cure even when the composition holds water therein.

The surfactant includes an anionic surfactant, a nonionic surfactant, a cationic surfactant and an ampholytic surfactant. These surfactants may be used singly or in combination of two or more thereof.

Among these surfactants, one or more selected from an anionic surfactant and a nonionic surfactant are preferred.

Examples of the anionic surfactant include alkyl sulfate salts such as sodium lauryl sulfate, and triethanolamine lauryl sulfate; polyoxyethylene alkyl ether sulfate salts such as sodium polyoxyethylene lauryl ether sulfate, and triethanolamine polyoxyethylene alkyl ether sulfate; dodecylbenzenesulfonic acid, sulfonate salts such as sodium dodecylbenzenesulfonate, sodium alkylnaphthalenesulfonate, and sodium dialkylsulfosuccinate; fatty acid salts such as sodium stearate soap, potassium oleate soap, and potassium castor oil soap; naphthalenesulfonic acid/formalin condensation product, and special polymers.

Among these, sulfonate salts are preferred, sodium dialkylsulfosuccinate is more preferred, and sodium dioctylsulfosuccinate is even more preferred.

Examples of the nonionic surfactant include polyoxyethylene alkyl ethers such as polyoxylauryl ether, polyoxyethylene cetyl ether, polyoxyethylene stearyl ether, and polyoxyethylene oleyl ether; polyoxyethylene derivatives such as polyoxyethylene-distyrenated phenyl ether, polyoxyethylene tribenzyl phenyl ether, and polyoxyethylene polyoxypropylene glycol; sorbitan fatty acid esters such as polyoxyalkylene alkyl ether, sorbitan monolaurate, sorbitan monopalmitate, and sorbitan monostearate; polyoxyethylene sorbitan fatty acid esters such as polyoxyethylene sorbitan monolaurate, polyoxyethylene sorbitan monolaurate, and polyoxyethylene sorbitan monopalmitate; polyoxyethylene sorbitol fatty acid esters such as polyoxyethylene sorbitol tetraoleate; glycerin fatty acid esters such as glycerin monostearate, and glycerin monooleate.

Among these, polyoxyethylene lauryl ether, polyoxyethylene cetyl ether, polyoxyethylene stearyl ether, polyoxyethylene oleyl ether and polyoxyethylene alkyl ether are preferred. HLB (hydrophile-lipophile balance) of the nonionic surfactant is preferably 5 to 15, more preferably 6 to 12.

In the case where the radical-polymerizable resin composition comprises a surfactant, the amount thereof is preferably 0.01 to 10 parts by mass relative to 100 parts by mass of the radical-polymerizable compound, more preferably 0.05 to 7 parts by mass, even more preferably 0.1 to 5 parts by mass.

### [Wetting Dispersant]

The radical-polymerizable resin composition of the present invention may comprise a wetting dispersant for improving the penetrability thereof into a wet or submerged object to be repaired.

The wetting dispersant includes a fluorine wetting dispersant and a silicone wetting dispersant. These may be used singly or in combination of two or more thereof.

Commercial products of a fluorine wetting dispersant include Megafac (registered trademark) F176, Megafac (registered trademark) R08 (both manufactured by DIC Corporation), PF656, PF6320 (manufactured by OMNOVA Solutions Inc.), Troysol S-366 (manufactured by Troy Chemical Corporation), Fluorad FC430 (manufactured by 3M Japan Limited), and Polysiloxane Polymer KP-341 (manufactured by Shin-Etsu Chemical Co., Ltd.).

Commercial products of a silicone wetting dispersant include BYK (registered trademark)-322, BYK (registered trademark)-377, BYK (registered trademark)-UV3570, BYK (registered trademark)-330, BYK (registered trademark)-302, BYK (registered trademark)-UV3500, BYK-306 (manufactured by BYK Japan KK), and Polysiloxane Polymer KP-341 (manufactured by Shin-Etsu Chemical Co., Ltd.).

Preferably, the silicone wetting dispersant includes a compound represented by formula (U). 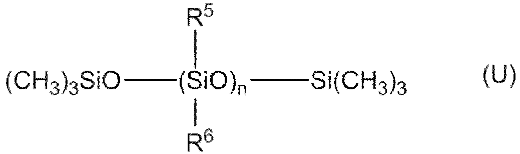 In the formula, R⁵ and R⁶ each independently represent a hydrocarbon group having 1 to 12 carbon atoms optionally having an aromatic ring, or -(CH₂)₃O(C₂H₄O)ₚ(CH₂CH(CH₃)O)_{q}R', n represents an integer of 1 to 200, R' represents an alkyl group having 1 to 12 carbon atoms, and p and q each represent an integer and satisfy q/p = 0 to 10.

Commercial products of a silicone wetting dispersant including the compound represented by formula (U) include BYK (registered trademark)-302 and BYK (registered trademark)-322 (manufactured by BYK Japan KK).

In the case where the radical-polymerizable resin composition of the present invention comprises a wetting dispersant, the amount thereof is preferably 0.001 to 5 parts by mass relative to 100 parts by mass of the radical-polymerizable compound (C), more preferably 0.01 to 2 parts by mass.

### [Wax]

The radical-polymerizable resin composition of the present invention may comprise wax.

The wax includes paraffin waxes and polar waxes. These may be used singly or in combination of two or more thereof.

As paraffin waxes, known ones having a different melting point can be used. As polar waxes, those having both a polar group and a nonpolar group in the structure may be used, and specific examples thereof include NPS (registered trademark)-8070, NPS (registered trademark)-9125 (manufactured by Nippon Seiro Co., Ltd.), Emanon (registered trademark) 3199, and Emanon (registered trademark) 3299 (manufactured by Kao Corporation).

In the case where the radical-polymerizable resin composition of the present invention comprises wax, the amount thereof is preferably 0.05 to 4 parts by mass relative to 100 parts by mass of the radical-polymerizable compound (C), more preferably 0.1 to 2.0 parts by mass. However, in the case where the radical-polymerizable resin composition of the present invention is used in water, preferably, wax is not used since it may dissolve out in water.

### [Thixotropic Agent]

The radical-polymerizable resin composition of the present invention may comprise a thixotropic agent for the purpose of viscosity control for securing operability on a vertical surface or a ceiling surface.

The thixotropic agent includes an inorganic thixotropic agent and an organic thixotropic agent. The organic thixotropic agent includes a hydrogenated castor oil agent, an amide agent, a polyethylene oxide agent, a vegetable polymer oil agent, a surfactant agent, and a composite agent of these agents. Specific examples include DISPARLON (registered trademark) 6900-20X (by Kusumoto Chemicals, Ltd.).

The inorganic thixotropic agent includes silica type and bentonite type, and hydrophobic agents include Reolosil (registered trademark) PM-20L (silica by vapor phase reaction manufactured by Tokuyama Corporation), and Aerosil (registered trademark) R-106 (by Nippon Aerosil Co., Ltd.). Hydrophilic agents include Aerosil (registered trademark)-200 (by Nippon Aerosil Co., Ltd.). From the viewpoint of enhancing thixotropy, one prepared by adding a thixotropy modifier, BYK (registered trademark) R605 or BYK (registered trademark) R606 (manufactured by BYK Japan KK) to a hydrophilic baked silica can be also favorably used.

In the case where the radical-polymerizable resin composition of the present invention comprises a thixotropic agent, the amount thereof is preferably 0.01 to 10 parts by mass relative to 100 parts by mass of the radical-polymerizable compound, more preferably 0.1 to 5 parts by mass.

Preferably, the radical-polymerizable resin composition of the present invention does not comprise water. However, the composition may comprise water in an amount of less than 5% by mass of the composition, which may incidentally mix in the radical-polymerizable resin composition from the ambient environment during manufacture or use of the composition.

### [Production Method for Radical-Polymerizable Resin Composition]

The production method for the radical-polymerizable resin composition of the present invention includes a step 1 of mixing the metal-containing compound (A), the radical-polymerizable compound (C) and the elastomer (D) to prepare a liquid mixture (i), and a step 2 of mixing the liquid mixture (i) and the thiol compound (B) to prepare a liquid mixture (ii).

When the radical-polymerizable resin composition of the present invention is produced according to the above method, the thiol compound (B) can be efficiently coordinated around the metal of the metal-containing compound (A).

The mixing method in each step is not specifically limited, and may be carried out according to a known method. From the viewpoint of uniformly dispersing the elastomer (D), preferably, an unsaturated monomer is used as a part of the radical-polymerizable compound (C), the elastomer (D) is dissolved/dispersed in the unsaturated monomer, then the radical-polymerizable compound (C) is mixed with the other resin, and thereafter mixed with the metal-containing compound (A). The temperature in mixing is, from the viewpoint of uniformly mixing the components and from the viewpoints of preventing the components from being denatured, preferably 20 to 40°C.

Preferably, the production method of the present invention includes a step 3 of mixing the liquid mixture (ii) and the above radical polymerization initiator (E). By mixing the liquid mixture (ii) and the radical polymerization initiator (E) in the step 3, it is possible to prevent radical polymerization from starting before mixing the components. In the case where a thermal radical polymerization initiator (E-1) and a photoradical polymerization initiator (E-2) are combinedly used, it is preferable that the step 3 is carried out in a dark place, and a photoradical polymerization initiator (E-2) is first added and then a thermal radical polymerization initiator (E-1) is added.

The mixing order of the components other than those used in the steps 1 to 3 is not specifically limited, and the components may be mixed in any step. However, from the viewpoint that the components could be uniformly mixed prior to the start of radical polymerization, the components are mixed preferably in any of the step 1 or the step 2.

The radical-polymerizable resin composition of the present invention can also be produced according to any other method than the above-mentioned production method of the present invention, but the composition is preferably produced according to the production method of the present invention since a uniform composition could not be obtained in the other methods.

The radical-polymerizable resin composition of the present invention is preferably used as a curing agent not only in a dry state but also in water or seawater or in a wet state. The radical-polymerizable resin composition of the present invention can be cured not only in a dry state but also in water or seawater or in a wet state.

### [Curing Method for Radical-Polymerizable Resin Composition]

The radical-polymerizable resin composition of the present invention is cured on any of the surface of a substrate in a dry state, the surface of a substrate in water, the surface of a substrate in seawater, or the surface of a substrate in a wet state.

In the curing method of the present invention, the radical-polymerizable resin composition of the present invention may be cured on any of a substrate in a dry state, in water, in seawater or in a wet state, and for example, the radical-polymerizable resin composition prepared by mixing the components may be dropped into water, and as needed, after arranging its shape with a trowel, it is cured by leaving to stand for 1 min to 50 h.

According to the curing method for the radical-polymerizable resin composition of the present invention, a cured product can be obtained easily and rapidly. The composition is effective for use in a dry state, and particularly effective for use on a submerged concrete surface in a brackish water region, in a seawater region or in a river region, and can be used as a repairing material.

The material of the substrate includes concrete, asphalt concrete, mortar, bricks, wood, metal, and in addition to these, thermosetting resins such as phenolic resins, epoxy resins, melamine resins, urea resins, unsaturated polyester resins, vinyl ester resins, alkyd resins, polyurethanes, and polyimides; and thermoplastic resins such as polyethylenes, polypropylenes, polyvinyl chlorides, polystyrenes, polyvinyl acetates, polyurethanes, Teflon (registered trademark), ABS resins, AS resins, and acrylic resins.

In addition, the radical-polymerizable resin composition of the present invention can be used as a resin composition for so-called "primer treatment," i.e., the composition may be applied to the surface of a concrete structure before repairing, thereby forming a cured layer on the surface. In this case, the coating amount of the composition as a primer may be 20 to 800 g/m², preferably 30 to 300 g/m². The coating method may be any known methods using a brush, a roll, a spray gun, or a spatula.

Further, in the case where the radical-polymerizable resin composition is used as a primer, various types of resin composition may be applied onto the primer layer to form a multilayer structure having multiple functions.

Further, the radical-polymerizable resin composition of the present invention may also be used as a lining agent or a surface-finishing agent for the purpose of improving weather resistance, waterproofness, fouling resistance, repellency, and heat insulation of the repaired surface, and for plating the surface.

In the case where the radical-polymerizable resin composition of the present invention is required to adhere rapidly, for example, within about 6 h especially in a wet state or in water, an extremely strong rapid-curing resin composition that can complete the polymerization rapidly must be used for the purpose of finishing the curing quickly.

In the case where such a strong rapid-curing radical-polymerizable resin composition is used, it is preferable that a strong polymerization inhibitor or curing retardant is used along with the composition for the purpose of securing enough working time for the worker. Further, it is preferable that the water existing on the surface of a structure is temporarily absorbed into the resin by using wax, a wetting dispersant, a surfactant, or a polyisocyanate compound. With that, for example, the working time for repairing structures around railways or in tunnels can be extremely shortened, for example, within about 6 h from the last train to the first train. In addition, for the structures at piers and harbor facilities, ultra-short working time would be possible, for example, within about 6 h from low tide to high tide.

For example, in the case where the radical-polymerizable resin composition of the present invention is required to adhere to a structure within a short period of time of about 12 h under the condition of an outside temperature of 5°C, especially in a wet state or in water, a method wherein an extremely strong rapid-curing resin composition comprising an increased amount of the radical initiator is used to cure the composition quickly is preferred. According to this method, for example, various structures may be repaired or repaired temporary under the water existing condition in the off-season in winter.

In the case where the radical-polymerizable resin composition of the present invention comprises a photoradical polymerization initiator (E-2), the radical-polymerizable resin composition is applied to a substrate and then photocured, or the radical-polymerizable resin composition is pre-polymerized to prepare a sheet (B-stage or prepreg formation) and then the sheet is photocured on a substrate.

The light source may be any one having a spectral distribution in a photosensitive wavelength range of the photoradical polymerization initiator (E-2), and examples thereof include sunlight, UV lamp, near-IR lamp, sodium lamp, halogen lamp, fluorescent lamp, metal halide lamp, and LED. In case of using two or more kinds of photoradical polymerization initiators (E-2), the wavelength for prepolymerization and polymerization can be changed by using a wavelength cut filter to the light source or using a specific wavelength of LED. The wavelength for prepolymerization is preferably a long wavelength having a low energy level, and in particular, near-IR light is preferred for easy control of the degree of polymerization. In the present invention, UV light (UV ray) indicates a light of 280 to 380 nm; visible light (visible ray) indicates a light of 380 nm to 780 nm; and near-IR light (near-IR ray) indicates a light of 780 to 1,200 nm. The irradiation time with lamp necessary for prepolymerization may vary depending on the effective wavelength range of the light source, the output thereof, the irradiation distance, the thickness of the composition and others, and therefore could not be specifically defined, but, for example, the irradiation time may be 0.01 h or more, preferably 0.05 h or more.

A specific example of using a photoradical polymerization initiator (E-2) is a radical-polymerizable resin composition comprising a visible ray radical polymerization initiator and a near-IR ray radical polymerization initiator. This composition is impregnated into a vinylon mesh or a vinylon mat and layered to produce a sheet sandwiched between films. The sheet is irradiated with near-IR ray for prepolymerization, and thus a visible ray-curable prepreg sheet in which the visible ray radical polymerization initiator and the radical-polymerizable compound remain is produced, which can be used as a photocurable material. The photocurable prepreg sheet can be rapidly cured by the irradiation with a light sensitive to the remaining visible ray radical polymerization initiator.

In using the prepreg sheet, the substrate surface may be treated with a primer, or the space between the prepreg sheets may be filled up with putty. The sheets may be independently photocured in each step or the sheets may applied on a substrate at the same time and then photocured simultaneously. Plural prepreg sheets may be layered. In the case where plural prepreg sheets are layered, the lower prepreg sheet may be processed by sanding treatment or primer treatment. When the lower prepreg sheet is uncured, another prepreg sheet may be layered thereon with not treatment.

A repairing material for inorganic structure, a radical-polymerizable coating composition, a curable material for prevention of concrete spalling, and a reinforcing fiber-containing composite material, which are especially preferred applications of the radical-polymerizable resin composition of the present invention, are described below. The details mentioned above with respect to the radical-polymerizable resin composition (examples of the components, content of each component, etc.) apply to the above applications.

### (II) Repairing Material for Inorganic Structure

The repairing material for inorganic structure of the present invention comprises the radical-polymerizable resin composition of the present invention mentioned hereinabove, and can stably cure not only on a dry repair part in air but also on a repair part in a wet state or in water. In the present invention, "inorganic structure" means a structure formed of an inorganic compound such as cement, or mortar.

The details of the metal-containing compound (A), the thiol compound (B), the radical-polymerizable compound (C) and the elastomer (D) are as described in the section of "(I) Radical-Polymerizable Resin Composition", and are omitted here for reduction.

Preferably, the repairing material for inorganic structure of the present invention comprises the above-mentioned radical polymerization initiator (E). The repairing material for inorganic structure of the present invention may comprise the above-mentioned curing accelerator (H). However, as mentioned above, it is preferable that the repairing material for inorganic structure of the present invention does not comprise the curing accelerator (H) when the material is used on a wetted or submerged repairing part.

The repairing material for inorganic structure of the present invention may comprise the above filler (F). The details of the radical polymerization initiator (E), the curing accelerator (H) and the filler (F) that may be optionally included in the repairing material for inorganic structure of the present invention are as described in the section of "(I) Radical-Polymerizable Resin Composition", and are omitted here for reduction.

The repairing material for inorganic structure of the present invention may comprise the above-mentioned polymerization inhibitor and curing retardant. Further, the repairing material for inorganic structure of the present invention may comprise any other optional components mentioned above in the amount mentioned above.

### <Preparation of Repairing Material for Inorganic Structure>

The repairing material for inorganic structure of the present invention can be prepared according to a method including two steps of a step 1 of mixing the metal-containing compound (A), the radical-polymerizable compound (C) and the elastomer (D) to prepare a liquid mixture (i), and a step 2 of mixing the liquid mixture (i) and the thiol compound (B) to prepare a liquid mixture (ii). By this preparation process, the thiol compound (B) efficiently coordinates around the metal of the metal-containing compound (A).

The details of the preparation method for the repairing material for inorganic structure of the present invention are the same as those described above in the section of the production method for the radical-polymerizable resin composition.

The repairing material for inorganic structure of the present invention can be used in air but is preferably used on a part to be repaired in a wet state or in water. The repairing material for inorganic structure of the present invention can cure on any of repairing parts in a dry state in air or even in a wet state or in water.

The repairing material for inorganic structure of the present invention can be used for both indoor parts and outdoor parts, for example, for repairing parts with concrete surfaces of floors, walls, ceilings, corridors, platforms, stairs and others of houses, factories, station buildings, etc.

The wet parts to be repaired include tunnels, bridges and others of railways, subways, highways, etc. and bridge piers of highways, monorails, etc. Even when these parts are wetted entirely owing to weather environments such as rains, snows, and fogs, the repairing material for inorganic structure of the present invention can be used in the same manner as in the case of using for a dry repair part in air.

The repair parts in water include submerged concrete structures, for example, agricultural irrigation channels in farm fields; concrete structures of sluice gate facilities and bridge piers; structures in waterworks systems, sewerage systems, sewage plumbing, lakes, water reservoirs, etc.; and industrial channels and pits. Further, the repairing material for inorganic structure of the present invention can be used favorably in quay, revetment wall, and breakwater in tidal area or brackish water where submerging and drying are repeated by tides; bridge piers, underground tunnels and others of highways, monorails, etc.; offshore airports, landing piers, undersea facilities and others.

### [Inorganic Structure-Repairing Method]

The repairing material for inorganic structure of the present invention can be used especially as a section repairing material, a crack injection material, a water sealant, and an anchor bolt.

The method for repairing inorganic structure of the present invention is a method of applying the repairing material for inorganic structure to the part to be repaired to form a coating film thereon, followed by curing the coating film.

In addition, the method for repairing inorganic structure of the present invention is a method of injecting the repairing material for inorganic structure into voids having formed in a part to be repaired to fill up the voids, followed by curing the material therein.

In the present invention, the part to be repaired includes not only voids such as cracks but also surfaces to be repaired.

In the present invention, the repairing method is not limited depending on the use as a section repairing material, a crack injection material, a water sealant, or an anchor bolt. When using as a section repairing material, a method where the repairing material for inorganic structure is applied onto the part to be repaired to form a coating film thereon and the coating film is then cured is preferred. When using as a crack injection material, a water sealant or an anchor bolt, a method where the repairing material for inorganic structure is injected into the voids formed in the part to be repaired and then cured therein is preferred.

The material of the part to be repaired includes concrete, asphalt concrete, mortar, wood, metal, thermosetting resins such as phenolic resins, epoxy resins, melamine resins, urea resins, unsaturated polyester resins, vinyl ester resins, alkyd resins, polyurethanes, and polyimides, and thermoplastic resins such as polyethylenes, polypropylenes, polyvinyl chlorides, polystyrenes, polyvinyl acetates, polyurethanes, Teflon (registered trademark), ABS resins, AS resins, and acrylic resins.

The injection method, the coating method and the curing method for the repairing material for inorganic structure of the present invention are not specifically limited. For example, the repairing material for inorganic structure is injected into the voids of a wet part to be repaired or applied onto the surface of the part to be repaired, and after optionally arranging its shape with a trowel, the material is left to stand for about 30 sec to 50 h for curing.

Using the repairing material for inorganic structure of the present invention, a cured product can be formed easily and rapidly, and therefore the material is favorably used on a dry part to be repaired in air, in a wet state or in water, especially on a concrete surface around the foreshore or submerged in water.

In the method for repairing inorganic structure of the present invention, the part to be repaired may be previously treated with a primer before the repairing material for inorganic structure is injected or applied thereto. In this description, "primer treatment" means a treatment of injecting or applying a primer material to the part to be repaired before the part is coated with the repairing material for inorganic structure, thereby forming a cured layer of the primer material on the part.

The primer treatment applicable to the present invention is not specifically limited, and a method of applying a known primer material to the necessary part with a roller, or a brush is employable.

Specific examples of primer include Ripoxy (registered trademark) R-806DA (manufactured by SHOWA DENKO K.K.). In addition, resins C-1 to C-5 to be mentioned in Examples below are also usable.

In the method for repairing inorganic structure of the present invention, the method of injecting or applying the repairing material for inorganic structure is not specifically limited. For example, an injection or coating method using a spray, an injection or coating method using a roller, an injection or coating method using a plasterer's trowel, or an injection or coating method using a tool such as a brush, or spatula is employable.

### (III) Radical-Polymerizable Coating Composition

The radical-polymerizable coating composition of the present invention (hereinafter this may be simply referred to as "coating composition") comprises the radical-polymerizable resin composition of the present invention mentioned above, and can be stably cured on a dry substrate in air and also even on a wet substrate in water or seawater.

The details of the metal-containing compound (A), the thiol compound (B), the radical-polymerizable compound (C) and the elastomer (D) constituting the radical-polymerizable coating composition are as described in the section of "(I) Radical-Polymerizable Resin Composition", and are omitted here for reduction.

Preferably, the metal-containing compound in the coating composition of the present invention is the metal soap (A1).

The radical-polymerizable coating composition of the present invention may comprise, in addition to the above components, one or more selected from the above polymerization inhibitor, curing retardant, coupling agent, polyisocyanate compound, curing catalyst, surfactant, wetting dispersant, wax and thixotropic agent, each in the amount mentioned above. Further, the composition may comprise one or more selected from a colorant (pigment, etc.), a decorating material (sand, silica sand, color sand, beads, color chips, mineral chips, glass chips, wood chips, color beads, etc.), a filming aid, a surface improver, a preservative, an antifungal agent, a defoaming agent, a light stabilizer, an ultraviolet absorbent, an antioxidant, and a pH conditioner.

### [Ultraviolet Absorbent]

The radical-polymerizable coating composition of the present invention may comprise an ultraviolet absorbent. Any known ultraviolet absorbent is usable, including 2-hydroxybenzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tertiary butylphenyl)-5-chlorobenzotriazole, 2-(2'-hydroxy-3'-tertiary butyl-5'-methylphenyl)-5-chlorobenzotriazole, 2-(2'-hydroxy-5'-tertiary octylphenyl)benzotriazole, 2-(2'-hydroxy-3',5'-dicumylphenyl)benzotriazole, and 2-(2'-hydroxy-3'-tertiary butyl-5'-carboxyphenyl)benzotriazole; benzoates such as phenyl salicylate, resorcinol monobenzoate, 2,4-di-tertiary butylphenyl-3,5-di-tertiary butyl-4-hydroxybenzoate, and 2,4-di-tertiary amylphenyl-3,5-di-tertiary butyl-4-hydroxybenzoate; substituted oxanilides such as 2-ethyl-2'-ethoxyaxanilide, and 2-ethoxy-4'-dodecyloxanilide; cyanoacrylates such as ethyl α-cyano-β,β-diphenylacrylate, and methyl 2-cyano-3-methyl-3-(p-methoxyphenyl)acrylate; and triazoletriazines such as 2-(2-hydroxy-4-octoxyphenyl)-4,6-bis(2,4-di-tertiary butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tertiary butylphenyl)-s-triazine. In addition, hindered amines are also usable.

In the case where an ultraviolet absorbent is added to the radical-polymerizable coating composition of the present invention, the amount thereof is preferably 0.01 to 10% by mass, more preferably 0.05 to 5% by mass.

### [Colorant]

The radical-polymerizable coating composition of the present invention may comprise a colorant. Any of pigments and dyes are usable as the colorant, but pigments are preferably used.

Not specifically limited, the pigments may be any known color pigments, extender pigments, and rustproof pigments. Depending on the shape, pigments are classified into spherical, acicular or fibrous pigments, but generally classified in accordance with the difference in the aspect ratio, that is, the ratio of major diameter/minor diameter of each particle.

The pigments are not specifically limited, and examples thereof include organic color pigments such as azo chelate pigments, insoluble azo pigments, condensed azo pigments, monoazo pigments, disazo pigments, diketopyrrolopyrrole pigments, benzimidazolone pigments, phthalocyanine pigments, indigo pigments, thioindigo pigments, perinone pigments, perylene pigments, dioxane pigments, quinacridone pigments, isoindolinone pigments, naphthol pigments, pyrazolone pigments, anthraquinone pigments, anthrapyrimidine pigments, and metal complex pigments; inorganic color pigments such as chrome yellow, yellow iron oxide, chromium oxide, molybdate orange, red iron oxide, titanium yellow, zinc oxide, carbon black, titanium dioxide, cobalt green, phthalocyanine green, ultramarine, cobalt blue, phthalocyanine blue, and cobalt violet; mica pigments (titanium dioxide-coated mica, color mica, metal-plated mica); graphite pigments, alumina flake pigments, titanium metal flakes, stainless flakes, micacious iron oxide, phthalocyanine flakes, metal-plated glass flakes, and other color or chromatic flat pigments; extender pigments such as titanium oxide, calcium carbonate, magnesium carbonate, barium sulfate, barium carbonate, magnesium silicate, clay, talc, silica, potassium feldspar, kaolin, fired kaolin, and bentonite.

In addition, rustproof pigments such as zinc powders, zinc alloy powders, zinc phosphate compounds, calcium phosphate compounds, aluminum phosphate compounds, magnesium phosphate compounds, zinc phosphite compounds, calcium phosphite compounds, aluminum phosphite compounds, strontium phosphite compounds, aluminum tripolyphosphate compounds, molybdate compounds, zinc cyanamide compounds, borate compounds, nitro compounds, composite oxides and others may also be used.

These pigments may be used singly or in combination of two or more thereof. In addition, color pigments, extender pigments and rustproof pigments may be combinedly used in any desired manner.

In the case where the radical-polymerizable coating composition comprises a pigment, the content of the pigment to the solid content of the coating composition preferably falls within a range of 5 to 70% by mass. When the pigment content is 5% by mass or more, the composition is excellent in ground masking performance. When the pigment content is 70% by mass or less, the composition is excellent in weather resistance. The pigment content is preferably 20 to 45% by mass. The solid content of the coating composition means the component that has remained when the volatile component such as solvent and others have been removed from the coating composition.

Preferably, the pigment content is adequately changed depending on the color, the object and the thickness of the coating composition. If light transmission is required to be shielded or the ground color is required to be masked, the addition of a small amount of a black pigment is sufficient, but a yellow or orange pigment is needed to be added in a larger amount as compared with the black pigment.

Among the above pigments, when an acicular pigment is used, the mechanical strength such as the cracking resistance and the impact resistance of the coating film can be improved.

Examples of the acicular pigment include wollastonite, sepiolite, chrysotile, amosite, tremolite, and zeolite. From the viewpoint of enhancing the strength the durability and the waterproofness of the cured product, wollastonite is preferred.

As wollastonite, commercial products may be used. Specifically, NYAD325 (trade name, manufactured by NYCO Mineral Corporation, wollastonite) is usable.

In the case where an acicular pigment is incorporated in the radical-polymerizable coating composition of the present invention, the content of the acicular pigment is preferably 0.1 to 70 % by mass relative to the solid content of the radical-polymerizable coating composition, more preferably 0.1 to 50% by mass, even more preferably 0.1 to 10% by mass.

Using a hollow spherical pigment as the pigment is advantageous in that the coating film can be light weight and is resistant to sagging. In addition, the pigment realizes heat-shielding and heat-insulating effects.

Examples of the hollow spherical pigment include pearlite, fly ash, and resin hollow balloons, and above all, hollow spherical particles of pearlite are preferred.

Here, the hollow spherical pigment means that the inside thereof is not solid but completely or incompletely hollow, and the hollow space confines a vapor such as air having a low heat conductivity or is in vacuum or under a reduced pressure. Examples of the hollow spherical pigment usable here include ceramic balloons and plastic balloons, and ceramic balloons are more preferred as usable at high temperatures.

Ceramic balloons include borosilicate glass balloons, silica balloons, shirasu balloons, fly ash balloons, zirconia balloons, alumina silicate balloons, fired vermiculite balloons, and pearlite balloons. From the viewpoint of the strength of the surface of the coating film to be formed, pearlite balloons are preferred.

As pearlite balloons, those having a mean particle size of 3 to 100 µm and having a mean specific gravity of 0.2 to 0.8 are preferably used. Commercial products of pearlite balloons may be used, and specifically, Onyxell ON4150 (trade name, manufactured by KD Ceratech Corporation) is usable.

In the case where a hollow spherical pigment is incorporated in the radical-polymerizable coating composition of the present invention, the content of the hollow spherical pigment is preferably 0.1 to 70% by mass in the radical-polymerizable coating composition, more preferably 0.1 to 30% by mass, even more preferably 0.1 to 10% by mass.

The surface of the acicular pigment and the hollow spherical pigment may be processed for various surface treatments (for example, surface tension reducing treatment with a silicone compound or a fluorine compound).

For improving the dispersibility of pigment, the radical-polymerizable coating composition of the present invention may comprise a pigment dispersant, a leveling agent, a sagging inhibitor, a defoaming agent, etc. These are not specifically limited, and may be adequately selected from those known in the art.

The radical-polymerizable coating composition of the present invention can be used without adding a colorant. In the case where substantially no colorant including a pigment is used, the composition can be used as a clear coating material such as varnish.

The clear coating material means a coating composition comprising substantially no colorant, and "substantially no colorant" means that the amount of a colorant in the solid component of the coating composition is 1% by mass or less, preferably 0.5% by mass or less, more preferably 0.1% by mass or less.

### <Two-Component Curable Coating Composition>

The radical-polymerizable coating composition of the present invention is preferably a two-component curable coating composition, and in particular, in the case where the radical-polymerizable coating composition comprises a radical polymerization initiator, the composition is preferably a two-component curable coating composition which comprises a base component and a curing agent, wherein the base component comprises the metal-containing compound (A), the thiol compound (B), the radical-polymerizable compound (C) and the elastomer (D) and the curing agent comprises the radical polymerization initiator (E).

In addition, it is preferable that the base component comprises a radical polymerization inhibitor for preventing any undesirable polymerization reaction.

Other ingredients than the above (A) to (E) and the radical polymerization inhibitor may be included in any of the base component and the curing agent, but it is preferable that the other additives are adequately selected so as to avoid undesirable curing.

### <Production Method for Radical-Polymerizable Coating Composition>

The production method for the radical-polymerizable coating composition of the present invention includes two steps of a step 1 of mixing the metal-containing compound (A), the radical-polymerizable compound (C) and the elastomer (D) to prepare a liquid mixture (i), and a step 2 of mixing the liquid mixture (i) and the thiol compound (B) to prepare a liquid mixture (ii).

When the radical-polymerizable coating composition of the present invention is produced according to the above method, the thiol compound (B) efficiently coordinates around the metal of the metal-containing compound (A).

The mixing method in each step is not specifically limited and may be carried out in any known manner. The temperature in mixing is, from the viewpoint of realizing uniform mixing and from the viewpoint of preventing the components from denaturing, preferably 20 to 40°C.

Preferably, the production method includes a step 3 of mixing the liquid mixture (ii) and the radical polymerization initiator (D). By mixing the liquid mixture (ii) and the radical polymerization initiator (D) in the step 3, it is possible to prevent radical polymerization from starting before mixing the components.

The mixing order of the other components than those used in the steps 1 to 3 is not specifically limited and may be mixed in any step. However, from the viewpoint that the components could be uniformly mixed prior to the start of radical polymerization, it is preferable that the components are mixed in any of the step 1 or the step 2.

The radical-polymerizable coating composition of the present invention can also be produced according to any other method than the above production method of the present invention, but the composition is preferably produced according to the production method of the present invention since a uniform composition could not be obtained in the other method.

The radical-polymerizable coating composition of the present invention is preferably used for curing not only in a dry state but also in water or seawater or in a wet state. By using the radical-polymerizable coating composition of the present invention, curing can be attained not only in a dry state but also in water, in seawater, or in a wet state.

### [Curing Method and Use of Radical-Polymerizable Coating Composition]

In the curing method for the radical-polymerizable coating composition of the present invention, the radical-polymerizable coating composition is cured on a surface of any of a substrate in a dry state, a substrate in water, a substrate in seawater, and a wet substrate.

The curing method is not specifically limited as long as the radical-polymerizable coating composition can be cured on a substrate in a dry state, in water or seawater, or in a wet state. In the curing method, the coating composition is preferably in the form applicable to a substrate.

The radical-polymerizable coating composition of the present invention is applied onto a substrate by a method selected from any known methods using a roller, a brush, a spray, or a spatula, although not specifically limited thereto.

After the radical-polymerizable coating composition prepared by mixing the components is applied to a substrate, the composition is cured by leaving to stand for one minute to 50 h.

According to the curing method, a cured product can be obtained easily and rapidly, and therefore, the method is effective not only in a dry state but also useful in a wet state.

The coating composition of the present invention is excellent in adhesion to wet surfaces of inorganic structures and can be applied by a simple method of a roller coating or a brush coating. Accordingly, the composition is usable in the places where coating in a wet condition is necessary, for example, for inorganic structures in the area of shores, river sides, and lakes and for outdoor structures in rainy weather, etc.

In addition, the coating composition of the present invention is excellent also in adhesion to various coating materials and sealing materials, and therefore can be used as primers or top coating materials. Further, when applied to the surface of an inorganic structure and cured thereon, the coating composition exhibits a certain level of strength rapidly even in a wet condition, and therefore can be used for repairing and reinforcing inorganic structures.

When a large amount of silica sand is incorporated in the coating composition of the present invention, the composition can be preferably used as a resin mortar.

Further, a top coating material may be applied onto the coating film of the coating composition of the present invention, thereby forming a top coating film thereon. In particular, in the case where a long-term weather resistance or a good appearance (color appearance) is needed, a fluororesin-based or urethane-based top coating material is preferably used.

### <Substrate (to be coated)>

The substrate (to be coated) to which the radical-polymerizable coating composition of the present invention is applied is not specifically limited, and examples thereof include metal substrates of iron, stainless, and surface-treated ones thereof; cement substrates of gypsum; concrete, asphalt concrete, mortar, bricks, glass, rubber, wood; plastic substrates of thermosetting resins such as phenolic resins, epoxy resins, melamine resins, urea resins, unsaturated polyester resins, vinyl ester resins, alkyd resins, polyurethanes, and polyimides; and plastic substrates of thermoplastic resins such as polyethylenes, polypropylenes, polyvinyl chlorides, polystyrenes, polyvinyl acetates, polyurethanes, Teflon (registered trademark), ABS resins, AS resins, and acrylic resins.

In addition, the coating composition is applicable to other various types of substrates in industrial fields which are made of the above materials, such as construction materials, and building structures in construction field; car bodies, and car parts in automobile industry; ships, submarines, airplanes, and rockets in transportation vehicles industry; and electric appliances, and electronic parts in the industrial field. In addition, the radical-polymerizable coating composition of the present invention can be used for remodeling the substrates mentioned above.

Further, the radical-polymerizable coating composition of the present invention is excellent in adhesion to wet concrete surfaces, reinforcing bars, steel plates and rusty surfaces, and is therefore usable as a coating material for various substrates.

The radical-polymerizable coating composition of the present invention may be a top coating composition for forming a top coating layer or may be an undercoating composition for forming an undercoating layer (primer layer), although not specifically limited to one of them.

The top coating composition may be required to have various functions such as waterproofness, heat resistance, heat absorbability, heat shielding performance, heat insulation, alkali resistance, acid resistance, solvent resistance, chemical resistance, weather resistance, antireflection performance, and light absorbability. The undercoating composition may be required to have functions such as wet surface adhesion, adhesion to top coating material, and rapid curability. These functions are not necessarily particular to each of the top coating composition and the undercoating composition, and needless to say, the top coating composition may also be required to have wet surface adhesion or may be required to have rapid curability.

The use of the top coating composition is not specifically limited. The radical-polymerizable coating composition of the present invention is preferably used as a top coating composition for repairing old coating films on interior or exterior structures. In particular, in repairing old coating films of exterior structures, the coating composition of the present invention can form a top coating layer even though the old coating films are in a wet state. In addition, using the coating composition of the present invention, it is possible to repair old coating films of interior structures in a wet area such as pools and bath rooms even when the parts to be repaired are in a wet state.

Further, the coating composition of the present invention is preferably used as a finish coating material for interior and exterior structures.

Further, by incorporating a colorant or fibers into the radical-polymerizable coating composition of the present invention, the color and the texture of the cured film can be changed. Such a composition is therefore usable as a decorating composition for various wall panels of concrete or mortar for use on walls of buildings, etc. The cured film of the radical-polymerizable coating composition of the present invention enhances the decorative appearance of wall panels and also works as a surface coating layer of the wall panels to improve scratch resistance and waterproofness thereof.

The radical-polymerizable coating composition of the present invention is preferably used as a coating composition for forming a waterproof layer on concrete members and also as a coating composition for forming an anticorrosive coating film on concrete members, which are applicable to wet concrete members of water storage facilities or structures around waterside, etc.

Further, the radical-polymerizable coating composition of the present invention can be used as a lining material or a surface finishing material for improving weather resistance, waterproofness, fouling resistance, repellency, and heat insulation of surfaces to be repaired and for plating surfaces to be repaired.

In the case where the radical-polymerizable coating composition of the present invention is used as a top coating composition, the coating amount is not specifically limited but is preferably 30 to 1,000 g/m², more preferably 50 to 800 g/m², even more preferably 70 to 700 g/m². The coating amount may be adequately controlled depending on the viscosity of the coating material, the solvent content, the curing shrinkage, etc.

The use as the undercoating composition is not specifically limited. For example, the radical-polymerizable coating composition of the present invention can be used as a coating composition for so-called "primer treatment" for forming a cured layer by applying to the surface of a concrete structure before repairing.

The coating amount as a primer is preferably 20 to 800 g/m², more preferably 30 to 300 g/m².

Further, another composition may be applied to the primer layer which is formed of the radical-polymerizable coating composition, thereby forming a multilayered structure having various functions. For example, a known lining material or a known surface-finishing material that is used in a dry condition can be used as an inter-coating agent or a top coating agent, while using the radical-polymerizable coating composition of the present invention as a primer to prevent water from bleeding from a substrate. The lining material or the surface-finishing material that may be combinedly used with the radical-polymerizable coating composition of the present invention is not specifically limited and may be any of those generally used in the art. For example, a vinyl ester lining material, and an emulsion coating material are usable.

In the case where the radical-polymerizable coating composition of the present invention is required to be adhered to a substrate rapidly, for example, within about 6 h, especially in a wet state, the curing can be finished quickly preferably by using an extremely strong rapid-curing coating composition in which the polymerization proceeds rapidly from its start and its end.

Such a strong rapid-curing radical-polymerizable coating composition preferably combinedly comprises a strong polymerization inhibitor or a curing retardant to secure enough working time for the worker. Further, it is preferable to confine the water on the surface of a substrate (to be coated) temporarily in the resin by using a wax, a wetting dispersant, a surfactant, or a polyisocyanate compound. With this method, for example, the repair work for structures around railways or in tunnels can be finished in an ultra-short period of time of about 6 h from the last train to the first train. In addition, the repair work for structures in piers and harbor facilities can be finished in an ultra-short period of time of about 6 h from low tide to high tide.

In the case where the radical-polymerizable coating composition of the present invention is required to be adhered to a structure rapidly within about 12 h, for example, at an outside temperature of 5°C, and especially in a wet condition, a method of quickly curing an extremely strong rapid-curing coating composition comprising an increased amount of the radical initiator is preferred. According to this method, for example, various structures may be repaired or temporary treated under a wet condition in the off-season in winter.

The viscosity of the radical-polymerizable coating composition of the present invention is preferably 1 to 15,000 mPa·s, more preferably 10 to 10,000 mPa·s, even more preferably 20 to 5,000 mPa·s each at 25°C. When the viscosity of the radical-polymerizable coating composition falls within the range, the composition is excellent in coatability.

The viscosity of the radical-polymerizable coating composition is measured according to a Brookfield viscometer method in which the viscosity (25°C) and the thixotropy index (value calculated by dividing the viscosity at 6 rpm by the viscosity at 60 rpm) of the coating composition are measured according to JIS K 6901 using a B-type (BM) viscometer at 25°C.

### (IV) Curable material for Prevention of Concrete Spalling

The curable material for prevention of concrete spalling of the present invention comprises the radical-polymerizable resin composition of the present invention mentioned hereinabove.

The curable material for prevention of concrete spalling of the present invention is applicable to concrete by a simple method of roller coating or brush coating and firmly adheres to concrete to exhibit a certain level of strength not only in a dry condition but also even in a wet condition or in water or seawater. Therefore, the curable material is useful for prevention of concrete spalling.

The details of the metal-containing compound (A), the thiol compound (B), the radical-polymerizable compound (C) and the elastomer (D) are as described in the section of "(I) Radical-Polymerizable Resin Composition", and are omitted here for reduction.

The curable material for prevention of concrete spalling of the present invention may comprise at least one selected from the radical polymerization initiator (E), the curing accelerator (H), the filler (F) and the fiber (G), each mentioned above. In particularly preferably, the material comprises the fiber (G) for enhancing spalling resistance and waterproofness.

The details of the fiber (G) usable in the curable material for prevention of concrete spalling are as described above. Glass fibers and organic fibers are preferred, and in consideration of workability, the fibers are preferably used in the form of cloth, mat, biaxial mesh or triaxial mesh. By using fibers in a biaxial mesh or triaxial mesh form, a curable material for prevention of concrete spalling that is lightweight and economical and is excellent in workability and durability is obtained. By using fibers excellent in transparency such as glass fibers or cellulose fibers, the deterioration of the under coat can be visually inspected from the outside.

As described above, when the curable material for prevention of concrete spalling of the present invention is used in a wet place or a submerged place, the curing accelerator (H) is preferably not used in the material.

The details of the radical polymerization initiator (E), the curing accelerator (H), the filler (F) and the fiber (G) are as described in the section of "(I) Radical-Polymerizable Resin Composition", and are therefore omitted here for reduction.

Further, the curable material for prevention of concrete spalling of the present invention may comprise any of the other optional components in the amount as described above.

### <Preparation of Curable Material for Prevention of Concrete Spalling>

The curable material for prevention of concrete spalling of the present invention can be prepared by a method comprising two steps: a step 1 of mixing the metal-containing compound (A), the radical-polymerizable compound (C) and the elastomer (D) to prepare a liquid mixture (i), and a step 2 of mixing the liquid mixture (i) and the thiol compound (B) to prepare a liquid mixture (ii). By this preparation method, the thiol compound (B) can efficiently coordinate around the metal of the metal-containing compound (A).

The details of the preparation method for the curable material for prevention of concrete spalling of the present invention are as described above with respect to the production method for the radical-polymerizable resin composition.

### <Method for Prevention of Concrete Spalling>

The method for preventing concrete spalling that uses the curable material for prevention of concrete spalling of the present invention comprises a step of applying the curable material for prevention of concrete spalling onto the surface of concrete to form a coating film thereon and curing the coating film. The curable material for prevention of concrete spalling of the present invention can be applied by a simple method of roller coating or brush coating, and the cured film exhibits excellent adhesion to concrete and a sufficient strength necessary for preventing the spalling not only on a dry condition but also on a wet surface.

In the case where the curable material for prevention of concrete spalling comprises the fiber (G), the performance of preventing concrete spalling is enhanced. The curable material for prevention of concrete spalling comprising the fiber (G) may be in any form, for example, a curable coating film formed by applying the radical-polymerizable resin composition of the present invention onto a surface of concrete, putting a mesh and/or fibrous structure thereon, and then applying the radical-polymerizable resin composition thereon; an impregnated article produced by impregnating the radical-polymerizable resin composition into the overlaid mesh or fibrous structure; or a prepreg sheet formed by prepolymerizing the impregnated article.

The prepreg sheet of the present invention is one prepared through prepolymerization of the radical-polymerizable resin composition comprising the fiber (G). During the prepolymerization step, each component acts on each other in a complicated manner so that the structure of the resultant composition is too much complicated, and the structure could not be specifically expressed. Consequently, the structure is expressed here as a prepreg sheet produced through prepolymerization.

The method for preventing concrete spalling of the present invention using the fiber (G) comprises a step of preparing a curable material for prevention of concrete spalling by impregnating the radical-polymerizable resin composition into a mesh or fibrous structure, a step of sticking the curable material for prevention of concrete spalling to a surface of concrete that has been optionally treated with a primer, and a step of curing the curable material. The mesh or fibrous structure impregnated with the radical-polymerizable resin composition may be a prepreg sheet.

Another method for preventing concrete spalling comprises a step of applying the radical-polymerizable resin composition onto a surface of concrete that has been optionally treated with a primer, a step of sticking a mesh and/or fibrous structure thereon, a step of further applying the radical-polymerizable resin composition thereon to form a curable material for preventing concrete spalling, and a step of curing the curable material.

The primer may be any known curable resin or the radical-polymerizable resin composition of the present invention. The curing method is as described above with respect to the radical-polymerizable resin composition.

A damaged concrete structure can be fully repaired by the following repairing method which comprises a step of directly or indirectly applying the radical-polymerizable resin composition, the repairing material for inorganic structure, the radical-polymerizable coating composition or the curing material for prevention of concrete spalling, each according to the present invention, to the surface of a damaged part of a concrete structure and a step of curing the applied material.

### Method for Repairing Damaged Concrete Structure

(1) A damaged part of a concrete structure is subjected to a scraping treatment or washed with high-pressure water to remove a brittle part and any unnecessary matters such as dust from the damaged part.
(2) As needed, the crack injection material or the water sealant (repairing material for inorganic structure) of the present invention is injected into the damaged part and cured therein to fill up the cracks and the microcracks in the damaged part, thereby preventing the propagation of crack and water leakage.
(3) As needed, by using the radical-polymerizable resin composition of the present invention, the surface of the damaged part, the crack injection material or the water sealant is subjected to primer treatment.
(4) The section repairing material (repairing material for inorganic structure) of the present invention is applied to the surface of the damaged part and cured to repair the damaged part.
(5) By applying and curing the curable material for prevention of concrete spalling of the present invention, the surface of the damaged part is reinforced.
(6) For protecting the damaged part and controlling the color thereof, the radical-polymerizable coating composition or the surface finishing material of the present invention is applied to the damaged part and cured to protect the surface of the damaged part.

The radical-polymerizable coating composition may comprise a colorant and may not comprise a colorant. When the composition comprises a colorant, the esthetic appearance is improved. In addition, the radical-polymerizable coating composition may be used as a top coating agent for providing various functions such as waterproofness, water resistance, salt resistance, corrosion resistance, acid resistance, alkali resistance, heat resistance, heat-shielding performance, heat insulation, light proofness, and weather resistance.

In the method of repairing a damaged concrete structure described above, one or more materials of the present invention selected from the radical-polymerizable resin composition, the primer, the crack injection material, the water sealant, the section repairing material, the radical-polymerizable coating composition and the curing material for prevention of concrete spalling optionally comprising reinforcing fibers may be combinedly used with any of known materials other than the radical-polymerizable resin composition of the present invention, for example, one or more known materials selected from radical-polymerizable resin compositions for various uses, epoxy resin-based repairing materials for various uses, various types of silicone-based repairing materials, various types of polymer cement-type repairing materials, and various types of inorganic repairing materials. For example, the material of the present invention and a known material may be combinedly used as a repairing material for concrete structures to form a two or more layered structure.

In this case, these materials may be used irrespective of the type of the substrate or the state of the substrate. Particularly, better effects may be obtained by combinedly using a known repairing material after forming a primer of the radical-polymerizable resin composition of the present invention on a wet surface or after applying the material of the present invention on a wet surface.

### Examples

The present invention is described with reference to Examples.

The materials used in the production of the radical-polymerizable resin compositions (hereinafter also referred to as "resin compositions") in Examples 1 to 11 and Comparative Examples 1 to 3 are mentioned below.

### <Metal-Containing Compound (A)>

### Metal Soap (A1-1)

Cobalt octylate (Hexoate Cobalt manufactured by Toei Chemical Industry Co., Ltd., cobalt content: 8% by mass in total amount of product, molecular weight: 345.34)

### Metal Soap (A1-2)

Manganese octylate (Hexoate Manganese manufactured by Toei Chemical Industry Co., Ltd., manganese content: 8% by mass in total amount of product, molecular weight: 341.35)

### <Thiol Compound (B)>

In the following thiol compounds, "monofunctional" means that the number of the mercapto group in the molecule is 1, and each numeral prefix of "difunctional", "trifunctional" and "tetrafunctional" means the number of the mercapto groups in the molecule.

### Secondary Thiol Compound (B1-1)

Difunctional secondary thiol: Karenz MT (registered trademark) BD1 (1,4-bis(3-mercaptobutyryloxy)butane, molecular weight: 299.43) manufactured by SHOWADENKO K.K.

### Secondary Thiol Compound (B1-2)

Difunctional secondary thiol: thiol-modified polycarbonate diol (molecular weight: about 1,200) synthesized in Synthesis Example 1 below.

### Secondary Thiol Compound (B1-3)

Difunctional secondary thiol: thiol-modified dimer acid polyester polyol (hydroxy groups at both terminals, molecular weight: about 2,000) synthesized in Synthesis Example 2 below.

### <Radical-Polymerizable Compound (C)>

Radical-Polymerizable Compound (C-1)
   Vinyl ester resin synthesized in Synthesis Example 3 below.
Radical-Polymerizable Compound (C-2)
   Urethane resin synthesized in Synthesis Example 4 below.
Radical-Polymerizable Compound (C-3)
   Styrene, manufactured by NS Styrene Monomer Co., Ltd.
Radical-Polymerizable Compound (C-4)
   Dicyclopentenyloxyethyl methacrylate, FA-512MT, manufactured by Hitachi Chemical Co., Ltd.

### <Elastomer (D)>

Elastomer (D-1)
   Chloroprene/methacrylic acid copolymer, SHOPRENE (registered trademark) AF manufactured by SHOWADENKO K.K.
Elastomer (D-2)
   Chloroprene rubber (sulfur-modified), SHOPRENE (registered trademark) GW manufactured by SHOWA DENKO K.K.
Elastomer (D-3)
   Chloroprene rubber, SHOPRENE (registered trademark) W manufactured by SHOWA DENKO K.K.
Elastomer (D-4)
   Chloroprene/2,3-dichlorobutadiene copolymer, SHOPRENE (registered trademark) TRT manufactured by SHOWA DENKO K.K.
Elastomer (D-5)
   Isoprene rubber, LIR-30 manufactured by KURARAY Co., Ltd.
Elastomer (D-6)
   Isoprene polymer/maleic monomethyl ester adduct, LIR-410 manufactured by KURARAY Co., Ltd.
Elastomer (D-7)
   Styrene/isoprene rubber, JSR SIS-5250 manufactured by JSR Corporation

### <Radical Polymerization Initiator (E)>

Thermal Radical Polymerization Initiator (E-1)
Cumene hydroperoxide (CHP), PERCUMYL(registered trademark) H-80 manufactured by NOF Corporation

### Synthesis Example 1: Synthesis of thiol-modified polycarbonate diol (B1-2)

Into a 2-L flask, 500 g (500 mmol) of C-1090 (polycarbonate polyol manufactured by KURARAY Co., Ltd., molecular weight: 1,000, diol components: 3-methyl-1,5-pentanediol and 1,6-hexanediol), 144 g (1198 mmol) of 3-mercaptobutanoic acid (manufactured by SHOWA DENKO K.K.), 19 g (99.8 mmol) of p-toluenesulfonic acid monohydrate (manufactured by Tokyo Chemical Industry Co., Ltd.), and 500 g of toluene (manufactured by JUNSEI CHEMICAL Co., Ltd.) were charged and a Dean Stark apparatus and a condenser tube were attached to the flask.

The pressure inside the reaction system was reduced down to 73.3 kPa (550 mmHg) and then the contents were heated under stirring in an oil bath at 120°C. After stirred for 7 h and left to cool down to room temperature, the reaction liquid was neutralized with a 5% by mass aqueous solution of sodium hydrogencarbonate. The organic layer was washed three times with ion-exchanged water, and then the solvent was evaporated away via a vacuum pump to obtain the target thiol-modified polycarbonate diol (B1-2) as a pale yellow transparent liquid.

### Synthesis Example 2: Synthesis of thiol-modified dimer acid polyester polyol (B1-3)

Into a 500-mL flask, 110 g (55 mmol) of Priplast 1838-LQ-(GD) (dimer acid polyester polyol manufactured by CRODA Corporation, molecular weight: 2,000, with hydroxy groups at both terminals), 15.8 g (132 mmol) of 3-mercaptobutanoic acid (manufactured by SHOWA DENKO K.K.), 7.6 g (40 mmol) of p-toluenesulfonic acid monohydrate (manufactured by Tokyo Chemical Industry Co., Ltd.), and 150 g of toluene (manufactured by JUNSEI CHEMICAL Co., Ltd.) were charged and a Dean Stark apparatus and a condenser tube were attached to the flask.

The pressure inside the reaction system was reduced down to 73.3 kPa (550 mmHg) and then the contents were heated under stirring in an oil bath at 120°C. After stirred for 4 h and left to cool down to room temperature, the reaction liquid was neutralized with a 9% by mass aqueous solution of sodium hydrogencarbonate. The organic layer was washed three times with ion-exchanged water, and then the solvent was evaporated away via a vacuum pump to obtain the target thiol-modified dimer acid polyester polyol (B1-3) as a pale yellow transparent liquid.

The product was identified by mass analysis, 1H-NMR and 13C-NMR. The molecular weight was determined as a number-average molecular weight by GPC calibrated by polystyrene under the following condition.

### Measurement Condition

Apparatus: GPC System SIC-480II (manufactured by SHOWA DENKO K.K.)
Columns: GPC Columns K-801, K-802, K-802.5 (manufactured by SHOWA DENKO K.K.)
Detector: RI-201H (manufactured by SHOWA DENKO K.K.)
Eluent: chloroform
Sample: 100 µL of a solution of sample in chloroform was injected into a column at 40°C.

The same identification method and the measurement method were used in the following Synthesis Examples.

### Synthesis Example 3: Synthesis of radical-polymerizable compound (C-1)

Into a 3-L four-neck separable flask equipped with a stirrer, a reflux condenser tube, a gas introducing duct and a thermometer, 338.7 g of AER-2603 (bisphenol A-type epoxy resin manufactured by Asahi KASEI Corporation, epoxy equivalent 189), 96.0 g of bisphenol A (manufactured by Nippon Steel Chemical Corporation), and 0.87 g of triethylamine (manufactured by Daicel Corporation) were put, and reacted in a nitrogen atmosphere at 150°C for 2 h. Subsequently, this was cooled down to 90°C, and 81.6 g of methacrylic acid (manufactured by Mitsubishi Rayon Co., Ltd.), 1.6 g of 2,4,6-tris(dimethylaminomethyl)phenol (Seikuol TDMP manufactured by Seiko Chemical Corporation), 0.16 g of methylhydroquinone (manufactured by Tokyo Chemical Industry Co., Ltd.), 0.29 g of trimethylhydroquinone (manufactured by Tokyo Chemical Industry Co., Ltd.), and 155 g of styrene monomer (manufactured by NS Styrene Monomer Co., Ltd.) were added thereto and further reacted at 90°C for 20 hours with blowing air thereinto, and at the time when the acid value reached 10 mgKOH/g, the reaction was stopped to give a mixture of a radical-polymerizable compound (C-1) and styrene.

### Synthesis Example 4: Synthesis of radical-polymerizable compound (C-2)

Into a 3-L four-neck separable flask equipped with a stirrer, a reflux condenser tube, a gas introducing duct and a thermometer, 135.5 g of Millionate MT-F (diphenylmethane diisocyanate manufactured by Tosoh Corporation), 302.1 g of Actcol D-2000 (polypropylene glycol manufactured by Mitsui Chemicals, Inc.), 47.0 g of PEG-600 (polyethylene glycol manufactured by DKS Co., Ltd.), 0.17 g of dibutylhydroxytoluene (BHT, manufactured by Tokyo Chemical Industry Co., Ltd.) as a polymerization inhibitor, 84.2 g of dicyclopentenyloxyethyl methacrylate, and 0.04 g of dibutyltin dilaurate (KS-1260 manufactured by Kyodo Chemical Co., Ltd.) were put, and reacted at 60°C for 4 h. Next, 81.9 g of 2-hydroxypropyl methacrylate (manufactured by Nippon Shokubai Co., Ltd.) was dropwise added thereto with stirring, taking 2 hours, and after the dropwise addition, this was further stirred for 5 hours and reacted to give a mixture of a radical-polymerizable compound (C-2) and dicyclopentenyloxyethyl methacrylate.

### Example 1

A radical-polymerizable resin composition 1 of Example 1 was prepared according to the process mentioned below.

### [Step 1]

313 g of styrene and 47 g of SHOPRENE AF were mixed, and this was mixed with a mixture of the radical-polymerizable compound (C-1) obtained in Synthesis Example 3 and styrene to give a mixture of a radical-polymerizable compound (C) and an elastomer (D). Further, 0.16 parts by mass (in terms of the metal component amount) of the metal soap (A1-1) was added to 100 parts by mass of the radical-polymerizable compound (C-1) and well stirred at room temperature (25°C) to prepare a mixture (i).

### [Step 2]

The mixture (i) was well stirred with 1 part by mass, relative to 100 parts by mass of the radical-polymerizable compound (C-1), of the secondary thiol compound (B1-1) to prepare a mixture (ii).

### [Step 3]

Further, the mixture (ii) was stirred with 2 parts by mass, relative to 100 parts by mass of the radical-polymerizable compound (C-1), of the radical polymerization initiator (E-1) to prepare a radical-polymerizable resin composition 1.

### Examples 2 to 11 and Comparative Examples 1 to 3

Radical-polymerizable resin compositions 2 to 14 of Examples 2 to 11 and Comparative Examples 1 to 3 were produced according to the same process as in Example 1 except that the constituent components were blended in the blending ratio shown in Table 1 below.

The blending amount of the metal-containing compound (A) in each resin composition is not the blending amount of the compound itself but is the blending amount in terms of the metal component in the metal-containing compound (A).

### (The same shall apply hereinunder.)

The resultant radical-polymerizable resin compositions of Examples 1 to 11 and Comparative Examples 1 to 3 were tested as follows. A PET film was stuck to a glass plate having a size of 30 cm × 30 cm as a base thereon a rubber frame having a thickness of 4 mm was formed on the three sides of the base; and on the other hand, a PET film was stuck to another sheet of glass having a size of 30 cm × 30 cm prepared separately, and these two were laid one upon another, clipped and fixed to be in such a state that the PET film and the rubber frame could form a space.

The radical-polymerizable resin composition was cast into the space, left as such for about 1 week to cure. Thus produced, the cured product having a thickness of 4 mm was cut into the size described in the following, and then evaluated in various manners. The results are shown in Table 1.

### <Measurement of Tension, elongation at break (tensile strain)>

### <Measurement of Tension, maximum stress>

### <Measurement of Tension, elastic modulus>

Test pieces for use for measurement of elongation at break (tensile strain), tensile strength (maximum stress) and tensile elastic modulus were prepared according to 6.1 and 6.2 of JIS K 7161-2(2014). For the dimension of the test piece, Fig. 1-1A was selected.

The test speed in the tensile test was 5 mm/min. The tester used here was INSTRON 5900R.

The numerical values were determined according to JIS K 7161-1(2014), as follows.

The tensile strain (ε) means a tensile strain at yield (ε_{y}) when the sample has a yield point, but means a tensile strain at break (ε_{b}) when the sample does not have a yield point.

The tensile strength (σₘ) means the maximum stress observed initially during the test. This may be the same as a stress at yield.

The tensile elastic modulus (Eₜ) is determined from the inclination of the stress/strain curve between two points of ε₁ = 0.05% and ε₂ = 0.25%. In the case where the calculation mode is unsuitable, the elastic modulus was determined as the inclination according to the method of least squares.

### <Measurement of Bending, maximum stress>

Test pieces for use for measurement in the bending test were prepared as the recommended test pieces according to 6.1.2 of JIS K 7171(2016).

The test speed in the bending test was 2 mm/min. The tester was ORIENTEC UCT-1T.

The bending stress (σ_{f}) was calculated according to the method described in 9.1 of JIS K 7171(2016).

### <Measurement of compression strength at upper yield point>

Test pieces for use in the compression test were prepared as the recommended test pieces (B form) according to 6.1.2 of JIS K 7181(2011).

The test speed in the compression test was 1 mm/min.

The tester was INSTRON 5900R.

The compression strength (σ_{M}) means the maximum compression stress to occur during the compression test, and was calculated according to the method described in 10.1 of JIS K 7181(2011)

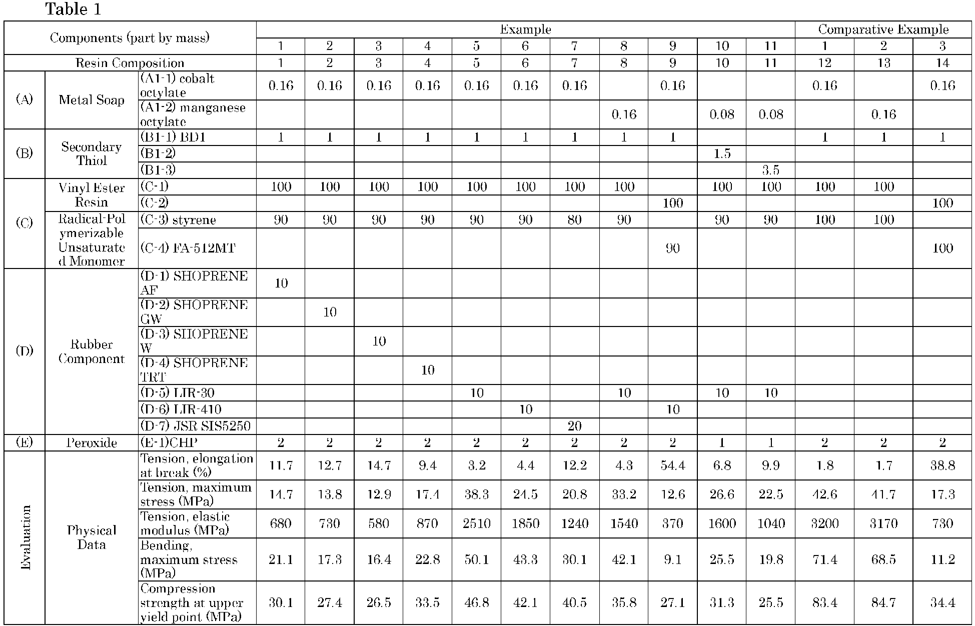

As in Table 1, Examples 1 to 7 prepared by adding the elastomer (D) to Comparative Example 1, Example 8 prepared by adding the elastomer (D) to Comparative Example 2, and Example 9 prepared by adding the elastomer (D) to Comparative Example 3 all improved in point of elongation. Namely, these are all resin compositions that are suitable for use on a dry surface, on a surface immersed in water and seawater, and on a wet surface.

The resin compositions of Examples 10 and 11 differ from that in Example 8 in that the thiol compound (B) was changed to one having a large molecular weight, and these still improved in point of elongation.

Next, a radical-polymerizable resin composition 15 of Comparative Example 4 was produced according to the same process as in Example 1 except that the constituent components were blended in the blending ratio as in Table 2. The radical-polymerizable resin compositions of Examples 1, 5, 8, 9 and 11 and Comparative Example 4 were tested according to the methods mentioned below for curability (measurement of gelling time, curing time, and curing temperature) and adhesion strength in a wet state (adhesion strength to wet surface). The results are shown in Table 2.

### <Curability Test (measurement of gelling time, curing time, and curing temperature)>

The radical-polymerizable resin composition was put into a test tube (outer diameter: 18 mm, length: 165 mm) up to a height of 100 mm from the bottom at 25°C, and the temperature thereof was measured using a thermocouple.

The time taken until the temperature of the radical-polymerizable resin composition changed from 25°C to 30°C was defined as a gelling time. The time taken until the temperature of the radical-polymerizable resin composition changed from 25°C to the peak exothermic temperature was defined as a curing time, and the peak exothermic temperature was defined as a curing temperature, which were measured according to JIS K 6901:2008.

### <Adhesion Strength Test in wet state (wet adhesion test)>

As a substrate, a concrete ordinary slab (60 mm × 300 mm × 300 mm) specified in JIS A 5371:2010 was prepared. The brittle matter and the powdery matter on the surface to be used in the adhesion test were fully removed from the concrete ordinary slab, and the surface of the slab was wiped with a soft clean cloth. By using a rubber plate having a width of 2 mm and a thickness of 4 mm, a formwork was formed on the concrete ordinary slab. The framework was produced with reference to 7.10 of JIS A 6909:2014 except for using the rubber plate.

Next, this was immersed in water for 24 hours or more so that the concrete ordinary slab could fully absorb water. Subsequently, with reference to the method described in Fig. 8 for the test process after immersion in water given in 7.10 of JIS A 6909:2014, this was set in water in such a manner that 5 mm from the top face of the concrete ordinary slab could be exposed out from the water surface, and immediately before applying a radical-polymerizable resin composition thereto, this was wiped with a dry cloth in such a degree that the surface of the concrete ordinary slab could no more have bleeding water on the surface thereof.

Subsequently, the prepared radical-polymerizable resin composition was cast into the frame, spread to have a thickness of about 4 mm using a trowel or a spatula, then aged at a temperature of 25°C and a humidity of 50% RH for a predetermined period of time, and thereafter tested for adhesion strength.

The adhesion strength test was as follows. Using a Ken-Ken type adhesion strength tester (Technotester Model R-10000ND, a tensile tester certified by Japan Society For Finishings Technology), each test piece was tested for adhesion strength at 5 points every 24 hours, and the result was shown by a mean value of 5 measured values of adhesion strength [N/mm²].

After the test, the type of fracture of the cured resin composition and the concrete ordinary slab test piece was visually observed. The case wherein the concrete ordinary slab (substrate) caused fracture was rated as "A (substrate fracture)". The case having both substrate fracture and interfacial fracture was rated as "B (substrate fracture/interfacial fracture)". The fracture occurred at the interface between the concrete ordinary slab and the cured resin composition was rated as "C (interfacial fracture)". The case wherein inside the cured resin composition caused fracture was rated as "D (cohesion failure)". In the present invention, "A (substrate fracture)" is preferred.

**Table 2**

| Components (part by weight) | | | Example | | | | | Comparative Example |
|---|---|---|---|---|---|---|---|---|
| | | | 1 | 5 | 8 | 9 | 11 | 4 |
| Resin Composition | | | 1 | 5 | 8 | 9 | 11 | 15 |
| (A) | Metal Soap | (A1-1) cobalt octylate | 0.16 | 0.16 | | 0.16 | | 0.16 |
| | | (A1-2) manganese octylate | | | 0.16 | | 0.08 | |
| (B) | Secondary Thiol | (B1-1) BD1 | 1 | 1 | 1 | 1 | | |
| | | (B1-2) | | | | | | |
| | | (B1-3) | | | | | 3.5 | |
| (C) | Vinyl Ester Resin | (C-1) | 100 | 100 | 100 | | 100 | 100 |
| | | (C-2) | | | | 100 | | |
| | Radical-Polymerizable Unsaturated Monomer | (C-3) styrene | 90 | 90 | 90 | | 90 | 90 |
| | | (C-4)FA-512MT | | | | 90 | | |
| (D) | Rubber Component | (D-1) SHOPRENE AF | 10 | | | | | 10 |
| | | (D-2) SHOPRENE GW | | | | | | |
| | | (D-3) SHOPRENE W | | | | | | |
| | | (D-4) SHOPRENE TRT | | | | | | |
| | | (D-5) LIR-30 | | 10 | 10 | | 10 | |
| | | (D-6) LIR-410 | | | | 10 | | |
| | | (D-7) JSR SIS5250 | | | | | | |
| (E) | Peroxide | (E-1)CHP | 2 | 2 | 2 | 2 | 1 | 2 |
| Evaluation | Curability | Gelling Time | 15 min 40 sec | 16 min 20 sec | 23 min 10 sec | 15 min 35 sec | 24 min 10 sec | 19 min 40 sec |
| | | Curing Time | 22 min 40 sec | 23 min 40 sec | 32 min 10 sec | 20 min 10 sec | 32 min 00 sec | 25 min 20 sec |
| | | Curing Temperature [°C] | 113.4°C | 109.4°C | 99.4°C | 121.4°C | 95.4°C | 98.8°C |
| | Wet Adhesion Test | Adhesion Strength [N/mm²] | 2.8 | 3.2 | 2.8 | 2.1 | 2.5 | 0.7 |
| | | Fracture State | A | A | A | A | A | C |

In Table 2, Examples 1, 5, 8, 9 and 11 were compared with Comparative Example 4. It is known that, using the radical-polymerizable resin compositions of the present invention, good adhesion strength to concrete ordinary slabs can be attained even in wet conditions.

## Claims

1. A radical-polymerizable resin composition comprising
one or more metal-containing compounds (A) selected from a metal soap (A1) and a β-diketone skeleton-containing metal complex (A2), wherein the metal element constituting the one or more metal-containing compounds (A) is at least one of selected from zirconium, manganese, cobalt, bismuth, and calcium;
one or more thiol compounds (B) selected from a secondary thiol compound (B1) and a tertiary thiol compound (B2), wherein the molar ratio of the thiol compound (B) to the metal component of the metal-containing compound (A) each in terms of the total amount [(B)/(A)] is from 0.1 to 150);
a radical-polymerizable compound (C) selected from a vinyl ester resin (epoxy (meth)acrylate resin), an unsaturated polyester resin, a polyester (meth)acrylate resin, a urethane (meth)acrylate resin, a (meth)acrylate resin, a radical-polymerizable unsaturated monomer having a vinyl group or a (meth)acryloyl group, and a mixture of the resin and the radical-polymerizable unsaturated monomer; and
an elastomer (D).

2. The radical-polymerizable resin composition according to claim 1, wherein the content of the metal-containing compound (A) as converted in terms of the metal component is from 0.0001 to 5 parts by mass relative to 100 parts by mass of the radical-polymerizable compound (C).

3. The radical-polymerizable resin composition according to claim 1 or 2, wherein the content of the radical-polymerizable compound (C) is from 10 to 99.9% by mass in the radical-polymerizable resin composition, and the content of the elastomer (D) is from 1 to 40 parts by mass relative to 100 parts by mass of the radical-polymerizable compound (C).

4. The radical-polymerizable resin composition according to any one of claims 1 to 3, wherein the elastomer (D) is at least one elastomer selected from a styrene-butadiene rubber, an acrylonitrile-butadiene rubber, an isoprene rubber, a butadiene rubber, a butyl rubber, a chloroprene rubber, an ethylene-propylene rubber, a urethane rubber, a silicone rubber, a chlorosulfonated polyethylene rubber, a chlorinated polyethylene rubber, an acrylic rubber, an epichlorohydrin rubber, and a fluorine-containing rubber.

5. The radical-polymerizable resin composition according to any one of claims 1 to 3, wherein the elastomer (D) is an elastomer in which at least one selected from an isoprene rubber, a butadiene rubber and a chloroprene rubber is subjected to (meth)acrylic modification.

6. The radical-polymerizable resin composition according to any one of claims 1 to 3, wherein the elastomer (D) is a copolymer of at least one selected from an isoprene, a butadiene and a chloroprene, and at least one selected from a (meth)acrylate having 2 or more (meth)acryloyloxy groups.

7. The radical-polymerizable resin composition according to any one of claims 1 to 6, wherein the thiol compound (B) is a compound having at least one ester structure represented by the following formula (Q-1) and having two or more mercapto groups bonding to a secondary or tertiary carbon atom in the molecule, including the mercapto group in the structure represented by the following formula (Q-1): 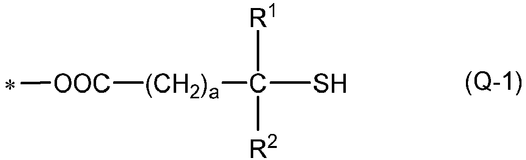 wherein R¹ represents a hydrogen atom, an alkyl group having 1 to 10 carbon atoms, or an aromatic group having 6 to 18 carbon atoms; R² represents an alkyl group having 1 to 10 carbon atoms or an aromatic group having 6 to 18 carbon atoms; * bonds to an organic group; and a represents an integer of 0 to 2.

8. The radical-polymerizable resin composition according to claim 7, wherein the thiol compound (B) having at least one ester structure represented by the formula (Q-1) is an ester compound of a mercapto group-containing carboxylic acid represented by the following formula (S) and a polyhydric alcohol: 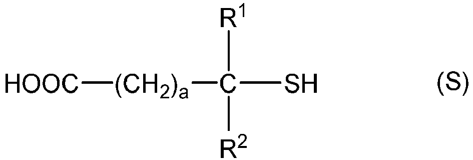 wherein R¹, R² and a have the same meaning as R¹, R² and a in the formula (Q-1), respectively.

9. The radical-polymerizable resin composition according to any one of claims 1 to 8, further comprising a radical polymerization initiator (E).

10. A concrete spalling-preventing curable material comprising the radical-polymerizable resin composition of any one of claims 1 to 9.

11. A primer comprising the radical-polymerizable resin composition of any one of claims 1 to 9.

12. The radical-polymerizable resin composition according to any one of claims 1 to 9, further comprising a filler (F).

13. A repairing material for inorganic structure, comprising the radical-polymerizable resin composition of any one of claims 1 to 9 and 12.

14. The repairing material for inorganic structure according to claim 13, which is a section repairing material, a crack injection material, or a water sealant.

## Patentansprüche

1. Radikalisch polymerisierbare Harzzusammensetzung, umfassend
eine oder mehrere metallhaltige Verbindung(en) (A), ausgewählt aus einer Metallseife (A1) und einem β-diketongerüsthaltigen Metallkomplex (A2), wobei das Metallelement, das die eine oder mehreren metallhaltigen Verbindung(en) (A) bildet, mindestens eines ist, ausgewählt unter Zirkonium, Mangan, Kobalt, Wismut und Calcium;
eine oder mehrere Thiolverbindungen (B), ausgewählt aus einer sekundären Thiolverbindung (B1) und einer tertiären Thiolverbindung (B2), wobei das molare Verhältnis der Thiolverbindung (B) zu der Metallkomponente der metallhaltigen Verbindung (A) jeweils bezogen auf die Gesamtmenge [(B)/(A)] 0,1 bis 150 beträgt;
eine radikalisch polymerisierbare Verbindung (C), ausgewählt aus einem Vinylesterharz (Epoxy(meth)acrylatharz), einem ungesättigten Polyesterharz, einem Polyester(meth)acrylatharz, einem Urethan(meth)acrylatharz, einem (Meth)acrylatharz, einem radikalisch polymerisierbaren ungesättigten Monomer mit einer Vinylgruppe oder einer (Meth)acryloylgruppe und einer Mischung aus dem Harz und dem radikalisch polymerisierbaren ungesättigten Monomer; und
ein Elastomer (D).

2. Radikalisch polymerisierbare Harzzusammensetzung nach Anspruch 1, wobei der Gehalt der metallhaltigen Verbindung (A), umgerechnet auf die Metallkomponente, 0,0001 bis 5 Massenteile, bezogen auf 100 Massenteile der radikalisch polymerisierbaren Verbindung (C), beträgt.

3. Radikalisch polymerisierbare Harzzusammensetzung nach Anspruch 1 oder 2, wobei der Gehalt an der radikalisch polymerisierbaren Verbindung (C) 10 bis 99,9 Massenprozent in der radikalisch polymerisierbaren Harzzusammensetzung beträgt und der Gehalt an dem Elastomer (D) 1 bis 40 Masseteile, bezogen auf 100 Masseteile der radikalisch polymerisierbaren Verbindung (C), beträgt.

4. Radikalisch polymerisierbare Harzzusammensetzung nach einem der Ansprüche 1 bis 3, wobei das Elastomer (D) mindestens ein unter einem Styrol-Butadien-Kautschuk, einem Acrylnitril-Butadien-Kautschuk, einem Isopren-Kautschuk, einem Butadien-Kautschuk, einem Butyl-Kautschuk, einem Chloropren-Kautschuk, einem Ethylen-Propylen-Kautschuk, einem Urethan-Kautschuk, einem Silikon-Kautschuk, einem chlorsulfonierten Polyethylen-Kautschuk, einem chlorierten Polyethylen-Kautschuk, einem Acryl-Kautschuk, einem Epichlorhydrin-Kautschuk und einem fluorhaltigen Kautschuk ausgewähltes Elastomer ist.

5. Radikalisch polymerisierbare Harzzusammensetzung nach einem der Ansprüche 1 bis 3, wobei das Elastomer (D) ein Elastomer ist, bei dem mindestens ein unter einem Isopren-Kautschuk, einem Butadien-Kautschuk und einem Chloropren-Kautschuk ausgewählter Kautschuk einer (Meth)acryl-Modifikation unterzogen wird.

6. Radikalisch polymerisierbare Harzzusammensetzung nach einem der Ansprüche 1 bis 3, wobei das Elastomer (D) ein Copolymer aus mindestens einer unter einem Isopren, einem Butadien und einem Chloropren ausgewählten Verbindung und mindestens einer unter einem (Meth)acrylat mit 2 oder mehr (Meth)acryloyloxygruppen ausgewählten Verbindung ist.

7. Radikalisch polymerisierbare Harzzusammensetzung nach einem der Ansprüche 1 bis 6, wobei die Thiolverbindung (B) eine Verbindung mit mindestens einer Esterstruktur der folgenden Formel (Q-1) ist und zwei oder mehr Mercaptogruppen aufweist, die an ein sekundäres oder tertiäres Kohlenstoffatom im Molekül gebunden sind, einschließlich der Mercaptogruppe in der Struktur der folgenden Formel (Q-1): 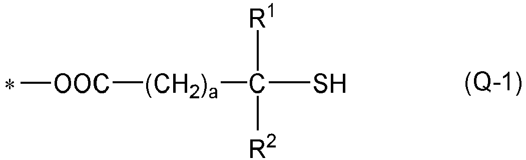 worin R¹ ein Wasserstoffatom, eine Alkylgruppe mit 1 bis 10 Kohlenstoffatomen oder eine aromatische Gruppe mit 6 bis 18 Kohlenstoffatomen darstellt; R² eine Alkylgruppe mit 1 bis 10 Kohlenstoffatomen oder eine aromatische Gruppe mit 6 bis 18 Kohlenstoffatomen darstellt; * an eine organische Gruppe bindet; und a eine ganze Zahl von 0 bis 2 darstellt.

8. Radikalisch polymerisierbare Harzzusammensetzung nach Anspruch 7, wobei die Thiolverbindung (B) mit mindestens einer Esterstruktur der Formel (Q-1) eine Esterverbindung einer Mercaptogruppen-haltigen Carbonsäure der folgenden Formel (S) und eines mehrwertigen Alkohols ist: 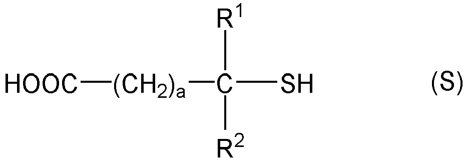 worin R¹, R² und a die gleiche Bedeutung wie R¹, R² bzw. a in der Formel (Q-1) haben.

9. Radikalisch polymerisierbare Harzzusammensetzung nach einem der Ansprüche 1 bis 8, die ferner einen Radikalpolymerisationsinitiator (E) enthält.

10. Betonabplatzungen verhinderndes härtbares Material, das die radikalisch polymerisierbare Harzzusammensetzung nach einem der Ansprüche 1 bis 9 enthält.

11. Grundierung, umfassend die radikalisch polymerisierbare Harzzusammensetzung nach einem der Ansprüche 1 bis 9.

12. Radikalisch polymerisierbare Harzzusammensetzung nach einem der Ansprüche 1 bis 9, die ferner einen Füllstoff (F) enthält.

13. Reparaturmaterial für anorganische Strukturen, umfassend die radikalisch polymerisierbare Harzzusammensetzung nach einem der Ansprüche 1 bis 9 und 12.

14. Reparaturmaterial für anorganische Strukturen nach Anspruch 13, das ein Schnittreparaturmaterial, ein Rissinjektionsmaterial oder ein Wasserabdichtungsmittel ist.

## Revendications

1. Composition de résine polymérisable par voie radicalaire comprenant
un ou plusieurs composés contenant un métal (A) choisis parmi un savon métallique (A1) et un complexe métallique contenant un squelette β-dicétone (A2), dans laquelle l'élément métallique constituant les un ou plusieurs composés contenant un métal (A) est au moins l'un d'éléments choisis parmi le zirconium, le manganèse, le cobalt, le bismuth et le calcium ;
un ou plusieurs composés de thiol (B) choisis parmi un composé de thiol secondaire (B1) et un composé de thiol tertiaire (B2), dans laquelle le rapport molaire du composé de thiol (B) au composant métallique du composé contenant un métal (A) chacun en termes de la quantité totale [(B)/(A)] est de 0,1 à 150) ;
un composé polymérisable par voie radicalaire (C) choisi parmi une résine d'ester vinylique (résine d'époxy (méth)acrylate), une résine de polyester insaturé, une résine de (méth)acrylate de polyester, une résine de (méth)acrylate d'uréthane, une résine de (méth)acrylate, un monomère insaturé polymérisable par voie radicalaire comportant un groupe vinyle ou un groupe (méth)acryloyle, et un mélange de la résine et du monomère insaturé polymérisable par voie radicalaire ; et
un élastomère (D).

2. Composition de résine polymérisable par voie radicalaire selon la revendication 1, dans laquelle la teneur du composé contenant un métal (A) telle que convertie en termes du composant métallique est de 0,0001 à 5 parties en masse par rapport à 100 parties en masse du composé polymérisable par voie radicalaire (C).

3. Composition de résine polymérisable par voie radicalaire selon la revendication 1 ou 2, dans laquelle la teneur du composé polymérisable par voie radicalaire (C) est de 10 à 99,9 % en masse dans la composition de résine polymérisable par voie radicalaire, et la teneur de l'élastomère (D) est de 1 à 40 parties en masse par rapport à 100 parties en masse du composé polymérisable par voie radicalaire (C).

4. Composition de résine polymérisable par voie radicalaire selon l'une quelconque des revendications 1 à 3, dans laquelle l'élastomère (D) est au moins un élastomère choisi parmi un caoutchouc de styrène-butadiène, un caoutchouc d'acrylonitrile-butadiène, un caoutchouc d'isoprène, un caoutchouc de butadiène, un caoutchouc de butyle, un caoutchouc de chloroprène, un caoutchouc d'éthylène-propylène, un caoutchouc d'uréthane, un caoutchouc de silicone, un caoutchouc de polyéthylène chlorosulfoné, un caoutchouc de polyéthylène chloré, un caoutchouc acrylique, un caoutchouc d'épichlorohydrine et un caoutchouc contenant du fluor.

5. Composition de résine polymérisable par voie radicalaire selon l'une quelconque des revendications 1 à 3, dans laquelle l'élastomère (D) est un élastomère dans lequel au moins un choisi parmi un caoutchouc d'isoprène, un caoutchouc de butadiène et un caoutchouc de chloroprène est soumis à une modification (méth) acrylique.

6. Composition de résine polymérisable par voie radicalaire selon l'une quelconque des revendications 1 à 3, dans laquelle l'élastomère (D) est un copolymère d'au moins un choisi parmi un isoprène, un butadiène et un chloroprène, et d'au moins un choisi parmi un (méth)acrylate comportant 2 groupes (méth)acryloyloxy ou plus.

7. Composition de résine polymérisable par voie radicalaire selon l'une quelconque des revendications 1 à 6, dans laquelle le composé de thiol (B) est un composé présentant au moins une structure d'ester représentée par la formule (Q-1) suivante et comportant deux groupes mercapto ou plus reliés à un atome de carbone secondaire ou tertiaire dans la molécule, incluant le groupe mercapto dans la structure représentée par la formule (Q-1) suivante : 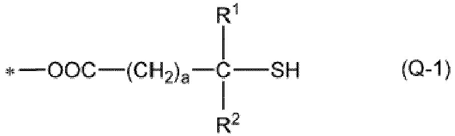 dans laquelle R¹ représente un atome d'hydrogène, un groupe alkyle comportant de 1 à 10 atomes de carbone, ou un groupe aromatique comportant de 6 à 18 atomes de carbone ; R² représente un groupe alkyle comportant de 1 à 10 atomes de carbone ou un groupe aromatique comportant de 6 à 18 atomes de carbone ; * se lie à un groupe organique ; et a représente un nombre entier de 0 à 2.

8. Composition de résine polymérisable par voie radicalaire selon la revendication 7, dans laquelle le composé de thiol (B) présentant au moins une structure d'ester représentée par la formule (Q-1) est un composé d'ester d'un acide carboxylique contenant un groupe mercapto représenté par la formule (S) suivante et d'un alcool polyhydrique : 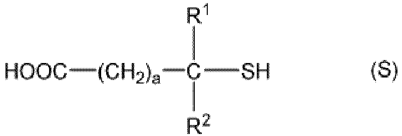 dans laquelle R¹, R² et a ont la même signification que R¹, R² et a dans la formule (Q-1), respectivement.

9. Composition de résine polymérisable par voie radicalaire selon l'une quelconque des revendications 1 à 8, comprenant en outre un initiateur de polymérisation radicalaire (E).

10. Matériau durcissable empêchant l'écaillage du béton comprenant la composition de résine polymérisable par voie radicalaire selon l'une quelconque des revendications 1 à 9.

11. Primaire comprenant la composition de résine polymérisable par voie radicalaire selon l'une quelconque des revendications 1 à 9.

12. Composition de résine polymérisable par voie radicalaire selon l'une quelconque des revendications 1 à 9, comprenant en outre une charge (F).

13. Matériau de réparation pour structure inorganique, comprenant la composition de résine polymérisable par voie radicalaire selon l'une quelconque des revendications 1 à 9 et 12.

14. Matériau de réparation pour structure inorganique selon la revendication 13, qui est un matériau de réparation de section, un matériau d'injection dans les fissures ou un agent d'étanchéité à l'eau.
